(19) Europäisches Patentamt
European Patent Office
Office européen des brevets

(11) **EP 3 445 132 B1**

(12) **EUROPEAN PATENT SPECIFICATION**

(45) Date of publication and mention
of the grant of the patent:
**24.02.2021 Bulletin 2021/08**

(51) Int Cl.:
***H04W 72/08*** *(2009.01)*

(21) Application number: **18193405.0**

(22) Date of filing: **30.06.2014**

(54) **USER APPARATUS AND BACKOFF CONTROL METHOD**

BENUTZERVORRICHTUNG UND BACKOFF-STEUERUNGSVERFAHREN

APPAREIL D'UTILISATEUR ET PROCÉDÉ DE COMMANDE DE RETOUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2013 JP 2013139206**

(43) Date of publication of application:
**20.02.2019 Bulletin 2019/08**

(62) Document number(s) of the earlier application(s) in
accordance with Art. 76 EPC:
**14819574.6 / 3 018 974**

(73) Proprietor: **NTT DOCOMO, INC.**
**Chiyoda-ku**
**Tokyo 100-6150 (JP)**

(72) Inventors:
• **NAGATA, Satoshi**
**Chiyoda-ku**
**Tokyo 100-6150 (JP)**
• **KUSUME, Katsutoshi**
**80687 München (DE)**
• **TAOKA, Hidekazu**
**80687 München (DE)**
• **HU, Liang**
**80687 München (DE)**

(74) Representative: **Hoffmann Eitle**
**Patent- und Rechtsanwälte PartmbB**
**Arabellastraße 30**
**81925 München (DE)**

(56) References cited:
**EP-A1- 2 288 223       WO-A1-2013/049959**
**US-A1- 2013 010 618    US-A1- 2013 138 831**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to terminal-to-terminal communication (D2D communication, device-to-device communication). More particularly, the present invention relates to a technique for efficiently using a radio resource (to be referred to as "resource" hereinafter) for transmitting a discovery signal in the terminal-to-terminal communication.

### BACKGROUND ART

In a mobile communication system, it is common that a terminal (to be referred to as "user apparatus UE" hereinafter) and a base station eNB performs communication so that communication is performed between user apparatuses UE. However, in recent years, various techniques are considered for performing direct communication between user apparatuses UE.

When performing communication between user apparatuses UE, it is necessary that a user apparatus UE discovers another neighboring user apparatus UE. As a method for discovering a user apparatus UE, there is a method in which each user apparatus UE transmits (broadcasts) a discovery signal including its own ID (identification information).

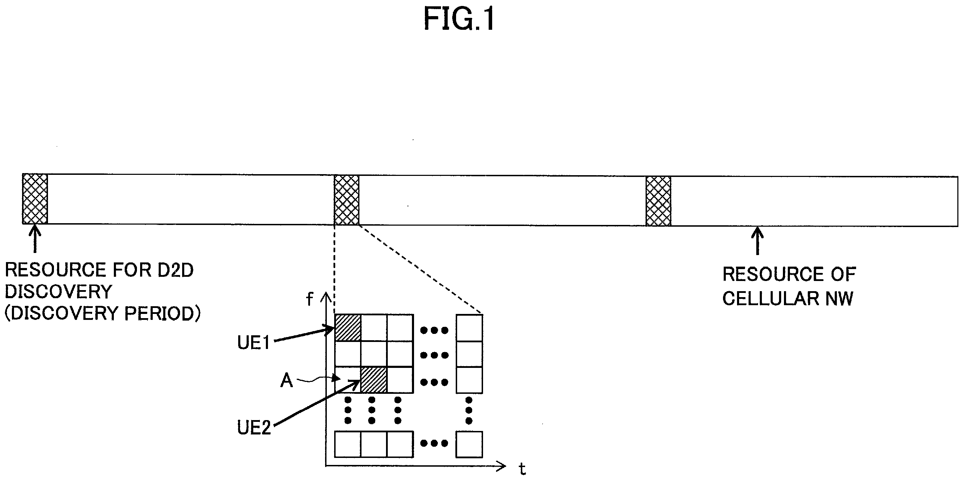

Fig. 1 is a diagram showing an example of a resource for transmitting a discovery signal. In the example of Fig. 1, it is defined that a discovery period, for performing discovery (and being discovered) of a user apparatus UE by transmitting and receiving a discovery signal, comes periodically. In each discovery period, a predetermined number of resources (each being a time-frequency resource, which is to be referred to as "discovery resource") for transmitting (and receiving) a discovery signal are defined. Each user apparatus UE transmits a discovery signal by using a discovery resource in the discovery period.

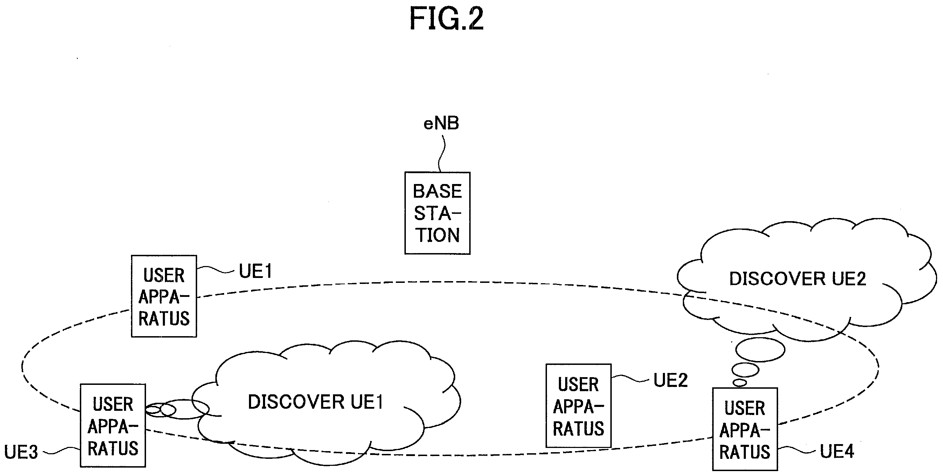

For example, a user apparatus UE1 of Fig. 2 transmits a discovery signal using a discovery resource indicated by UE1 of Fig. 1, a user apparatus UE2 of Fig. 2 transmits a discovery signal using a discovery resource indicated by UE2 of Fig. 1.

A user apparatus UE3 in Fig. 2 discovers the user apparatus UE1 by receiving a discovery signal transmitted by the user apparatus UE1, and a user apparatus UE4 discovers the user apparatus UE2 by receiving a discovery signal transmitted by the user apparatus UE2. Communication of the discovery signal is half-duplexing. Therefore, transmission and reception cannot be performed simultaneously. For example, in Fig. 2, in a case where the user apparatus UE1 transmits a discovery signal using a discovery resource of UE1 shown in Fig. 1, if the user apparatus UE3 transmits a discovery signal using a discovery resource indicated by A of Fig. 1, the user apparatus UE1 and the user apparatus UE3 cannot receive a discovery signal of the other party, and does not discover the other party. There is a patent document 1 as a prior art document on terminal-to-terminal communication.

### RELATED ART DOCUMENT

[PATENT DOCUMENT]

[PATENT DOCUMENT 1] JP2012-209893

US 2013/0010618 A1 describes a method, a computer program product, and an apparatus for wireless communication. The apparatus transmits a first peer discovery signal with a first periodicity/temporal frequency in a first set of peer discovery resources. The apparatus determines an energy on an allocated peer discovery resource of a second set of peer discovery resources. The apparatus refrains from transmitting a second peer discovery signal in the second set of peer discovery resources when the energy is greater than a threshold. The apparatus transmits the second peer discovery signal in the second set of peer discovery resources with a second periodicity/temporal frequency less than the first periodicity/temporal frequency when the energy is less than the threshold. The apparatus may utilize the first set of peer discovery resources every period and the second set of peer discovery resources once every N periods in which once every N periods is the second periodicity. Channel access may be based on a distributed coordination function (DCF) algorithm in which each wireless device that desires to send a peer discovery signal senses a channel, and if it is not idle, picks a random backoff window and transmits when its back-off counter expires. The counter is decremented by one for each slot time the channel is sensed to be idle after a duration known as a DCF interframe space (DIFS) during which the channel is idle as well

WO2013/049959 A1 discloses D2D communications where the D2D devices randomly select a preamble resource for transmitting a discovery signal.

### SUMMARY OF THE INVENTION

### PROBLEM TO BE SOLVED BY THE INVENTION

There are roughly two methods as methods for selecting a discovery resource in each user apparatus UE. One is a method in which each user apparatus UE arbitrarily selects a discovery resource from among usable discovery resources. This method is called distributed type (distributed discovery). Another one is a method in which the base station eNB assigns a respective discovery resource to the user apparatus UE. This method is called centralized type (centralized discovery).

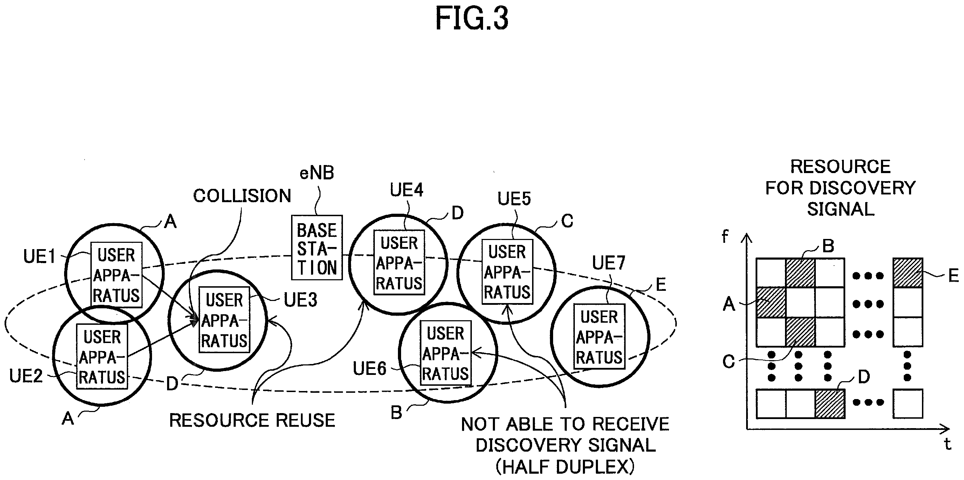

Fig. 3 is a diagram showing an example of transmission and reception of a discovery signal in the distributed type. In Fig. 3, each user apparatus UE uses a discovery resource indicated by each reference symbol. For example, the user apparatus UE1 and the user apparatus UE2 transmit a discovery signal using a discovery resource indicated by A in the resource diagram in the right side.

As shown in Fig.3, the user apparatuses UE1, UE2 and UE3 are located at a close distance with each other, and the user apparatuses UE1 and UE2 transmit a discovery signal using the same resource A. Thus, collision of discovery signals occurs, so that the user apparatus UE3 cannot discover any of the user apparatuses UE1 and UE2. Also, since the user apparatus UE3 and the user apparatus UE4 are far apart, these can use the same discovery resource D (spatial reuse, frequency reuse).

In the case of the centralized type, resources can be assigned in a centralized manner such that the above-mentioned collision does not occur. However, the centralized type cannot be applied when the user apparatus UE becomes out of a communication range of the base station eNB. Also, control load becomes high in the network (base station eNB) side. On the other hand, the distributed type can be applied even when the user apparatus UE becomes out of the communication range of the base station eNB, and control load in the network (base station eNB) side does not occur. However, there is a possibility in that collision and the like may occur.

For any of the distributed type and the centralized type, there is a limitation for discovery resources that can be used for transmitting and receiving a discovery signal for terminal-to-terminal communication. On the other hand, it is considered to apply terminal-to-terminal communication to various services. In the various services, there are services having strict requirements (example: latency is not permitted) related to public safety, for example. On the other hand, there are services in which requirements are not strict (example: tolerant to large latency) such as private individual-to-individual communication. A technique is required for services having such various requirements to utilize limited discovery resources efficiently without waste as much as possible by utilizing characteristics of each of the distributed type and the centralized type.

Therefore, for example, it can be considered to assign large amount of resources by the centralized type to user apparatuses UE for which requirement such as latency requirement is strict, and to assign relatively small amount resources by the distributed type to user apparatuses UE for which requirement is not strict. In this case, the probability of occurrence of collision may become high between a plurality of user apparatuses UE to which a set of resources is assigned by the distributed type, so that there is a possibility in that performance of terminal-to-terminal communication is deteriorated.

The present invention is contrived from the viewpoint of the above-mentioned points, and an object of the present invention is to provide a technique for decreasing possibility of occurrence of collision between a plurality of user apparatuses UE that perform terminal-to-terminal communication by using limited resources, and improving performance of terminal-to-terminal communication.

MEANS FOR SOLVING THE PROBLEM

The present invention provides a user apparatus and a method as set out in the attached claims.

EFFECT OF THE PRESENT INVENTION

According to an embodiment of the present invention, it becomes possible to decrease possibility of occurrence of collision between a plurality of user apparatuses UE that perform terminal-to-terminal communication by using limited resources, and to improve performance of terminal-to-terminal communication.

BRIEF DESCRIPTION OF THE DRAWINGS

Fig. 1 is a diagram showing an example of a resource for transmitting a discovery signal;
Fig. 2 is a diagram for explaining D2D communication;
Fig. 3 is a diagram showing an example of transmission and reception of a discovery signal;
Fig. 4 is a diagram showing a configuration example of a communication system in an embodiment of the present invention;
Fig. 5 is a diagram for explaining a resource configuration example;
Fig. 6 is a diagram showing examples of RG patterns;
Fig. 7 is a diagram showing a table including examples of requirements for each service in D2D communication;
Fig. 8 is a diagram showing an example of an environment in which there are latency tolerant (LT) user apparatuses UE and latency sensitive user apparatuses (LS) in high density;
Fig. 9 is a diagram showing an outline of embodiments;
Fig. 10 is a sequence diagram showing processes in a first embodiment;
Fig. 11 is a diagram showing a process for transmitting, to each user apparatus UE, a mapping table in which a service index is associated with a service type;
Fig. 12 is a diagram showing a process in which each user apparatus UE transmits a service index to a base station eNB;
Fig. 13 is a diagram showing a concrete example;
Fig. 14 is a diagram showing an example of DR assignment mode and RP partition identification information that are determined by the base station eNB based on information of a service index from each user apparatus UE;

Fig. 15 is a diagram showing an example of service change in the user apparatus UE;

Fig. 16 is a diagram showing an example 1 for UE clustering, mode selection and RP partitioning;

Fig. 17 is a diagram showing an example 2 for UE clustering, mode selection and RP partitioning;

Fig. 18 is a diagram showing an example 3 for UE clustering, mode selection and RP partitioning;

Fig. 19 is a diagram showing an example of a DR assignment method in the centralized type;

Fig. 20 is a diagram showing an example of an observation window for monitoring utilization status of DR;

Fig. 21 is a block diagram of a base station eNB in the first embodiment;

Fig. 22 is a block diagram of a user apparatus UE in the first embodiment;

Fig. 23 is a flowchart showing an operation example of the user apparatus UE in a second embodiment;

Fig. 24 is a diagram showing an operation example of the user apparatus UE in the second embodiment;

Fig. 25 is a diagram showing an example in which a plurality of user apparatuses UE perform backoff control;

Fig. 26 is a diagram showing an example of signaling in the second embodiment;

Fig. 27 is a block diagram of a base station eNB in the second embodiment;

Fig. 28 is a block diagram of a user apparatus UE in the second embodiment;

Fig. 29 is a diagram showing a case where the user apparatus UE goes out of a NW coverage in a third embodiment;

Fig. 30 is a diagram for explaining a band selection method in a case where the user apparatus UE goes out of the NW coverage;

Fig. 31 is a flowchart for showing a band selection process in a case where the user apparatus UE goes out of the NW coverage;

Fig. 32 is a diagram showing a case where the user apparatus UE enters a NW coverage in the third embodiment;

Fig. 33 is a block diagram of a base station eNB in the third embodiment;

Fig. 34 is a block diagram of a user apparatus UE in the third embodiment.

## EMBODIMENTS FOR CARRYING OUT THE INVENTION

In the following, embodiments of the present invention are described with reference to figures. The embodiments described below are merely examples, and the embodiments to which the present invention is applied are not limited to the embodiments below.

(Whole configuration example)

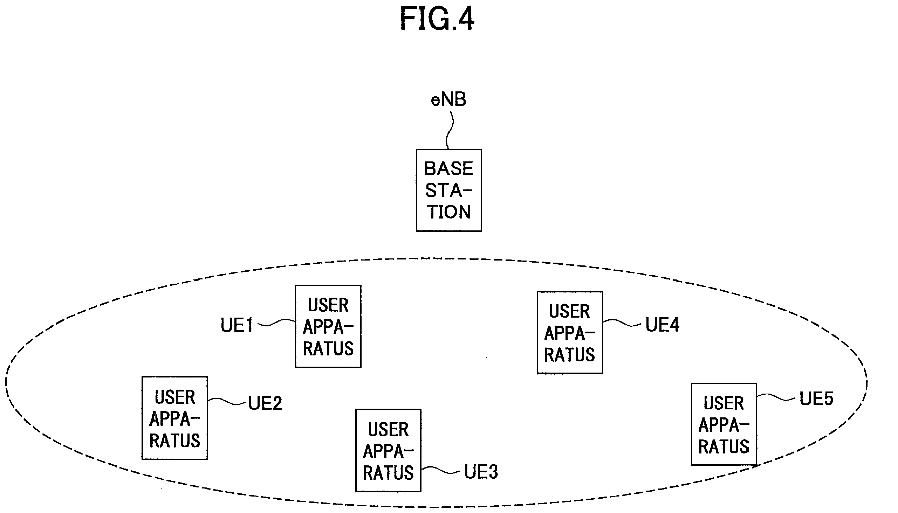

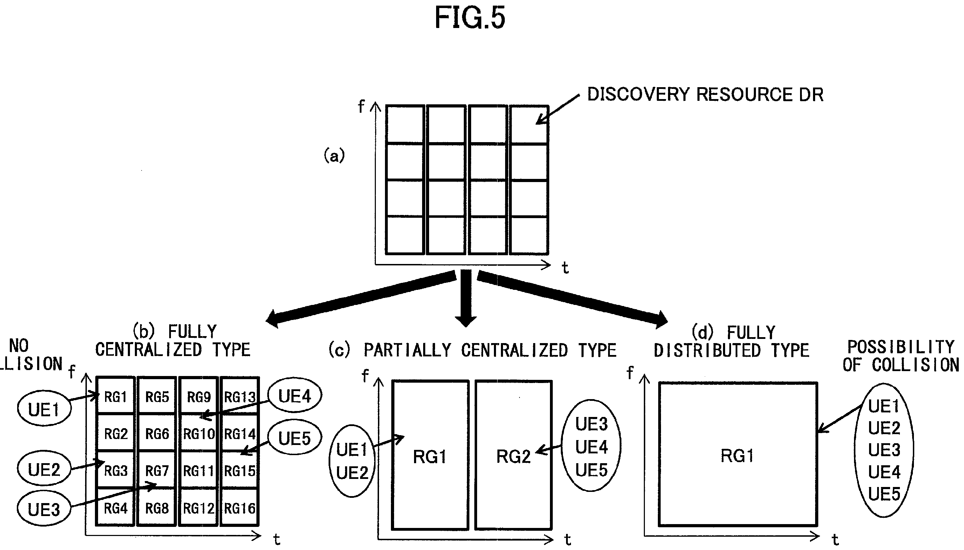

First, a whole configuration example of a system on which an embodiment of the present invention is based is described with reference to Fig. 4 and Fig. 5. Fig. 4 shows a configuration example of a communication system in the present embodiment. As shown in Fig. 4, the communication system of the present embodiment is a cellular communication system in which a plurality of user apparatuses UE exist under the base station eNB. The cellular communication system complies with LTE, for example. However, the system is not limited to LTE. In the specification and the claims, the term "LTE" is used to mean not only a communication scheme corresponding to 3GPP release 8 or 9, but also a communication scheme corresponding to 3GPP release 10, 11, 12 or later release.

Fig. 5 is a diagram for explaining an example of resource configurations on discovery resources of the present embodiment. In the example shown in Fig. 5, as an example for making the explanation easy to understand, as shown in Fig. 5(a), it is assumed that 4x4=16 discovery resources (DR: discovery resource) are usable in one discovery signal transmission occasion (discovery period). For the sake of convenience, the region usable as the discovery resources DR is referred to as a discovery resource whole region. One discovery resource DR is a minimum unit of resource used by a user apparatus UE for transmitting a discovery signal. For example, the discovery resource DR consists of a plurality of RBs (resource blocks) defined in LTE.

In the example shown in Fig. 5, a plurality of resource group (RG: Resource Group) patterns are introduced. One RG pattern includes one resource group or a plurality of resource groups RGs. One resource group RG includes one discovery resource DR or a plurality of discovery resources DRs. The user apparatus UE is assigned a RG pattern and a resource group RG that should be used in the RG pattern. This assignment is performed by a signaling from the base station eNB, for example. Also, there is a case in which assignment of a resource group RG is performed as an assignment of a hopping pattern of a resource group RG.

Then, the user apparatus UE arbitrarily (randomly, for example) selects one discovery resource DR from among one or a plurality of discovery resources DR in the assigned resource group RG so as to use it for transmitting a discovery signal. In a case where the resource group RG includes only one discovery resource DR, assignment of a resource group RG becomes assignment of a discovery resource DR as it is.

Fig. 5 shows three RG patterns as an example. The RG pattern shown in Fig. 5(b) is a pattern in which each of the resource groups RGs which form the RG pattern is one discovery resource DR. As mentioned above, this pattern corresponds to a case where each resource group RG includes only one discovery resource DR, and assignment of resource group RG becomes assignment of discovery resource DR as it is. As an example, Fig. 5(b) shows an assignment example of user apparatuses UE1-UE5 shown in Fig. 4. In the case of this pattern, assignment becomes the same as that of the before-mentioned centralized type as a result. Thus, this pattern can be called a fully centralized type.

The RG pattern shown in Fig. 5(c) is a pattern in which the discovery resource whole region is divided into two resource groups (RG1 and RG2). As shown in Fig. 5(c), user apparatuses UE1 and UE2 are assigned to RG1, and user apparatuses UE3, UE4 and UE5 are assigned to RG2. In the case of assignment shown in Fig. 5(c), for example, as to the user apparatus UE1, the RG pattern shown in Fig. 5(c) is assigned, and further, RG1 in the RG pattern is assigned.

The RG pattern shown in Fig. 5(c) is the centralized type in a point that one RG is assigned to a user apparatus UE from among a plurality of RGs, and the RG pattern shown in Fig. 5(c) is also the distributed type in a point that the user apparatus UE arbitrarily selects one discovery resource DR from among a plurality of discovery resources DR included in the RG. Thus, such a RG pattern can be called as a partially distributed type.

The RG pattern shown in Fig. 5(d) is a pattern in which only one resource group RG (RG1) is included in the RG pattern. In this case, 16 discovery resources DR shown in Fig. 5(a) are included in RG1, and each user apparatus UE selects one discovery resource DR from among 16 discovery resources DR to transmit a discovery signal. In this pattern, assignment becomes the same as that of the distributed type as a result. Thus, this pattern can be called a fully distributed type.

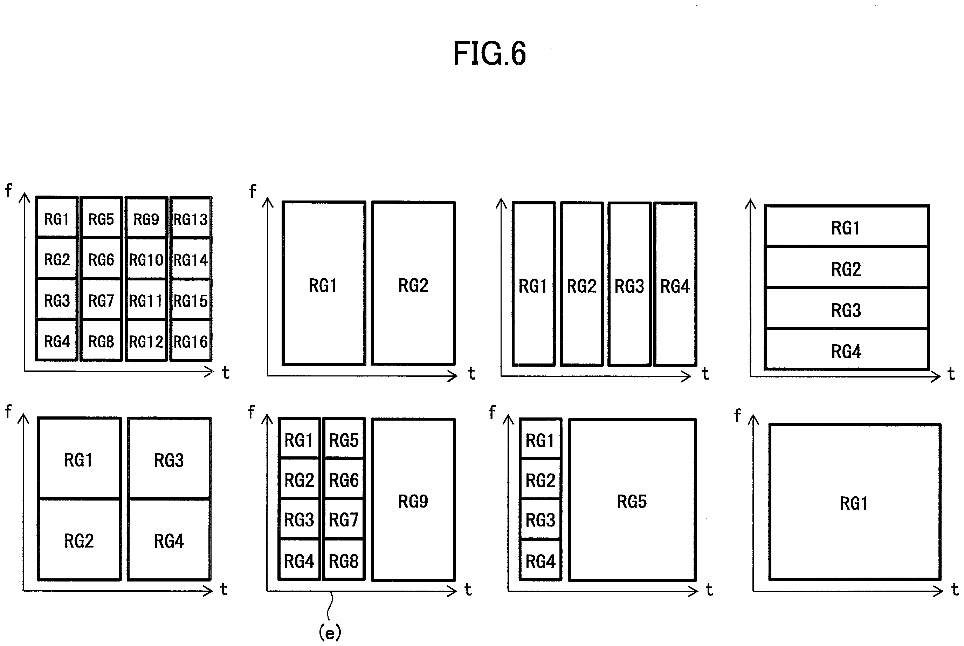

RG patterns are not limited to the above-mentioned particular patterns, and any RG pattern can be introduced. Examples of a plurality of RG patterns including the examples of RG patterns shown in Fig. 5 are shown in Fig. 6.

Hereinafter, "discovery resource DR" is described as "DR". Also, a mode of control in which the bases station eNB performs assignment of individual DRs is called a mode of centralized type, a mode of control in which the user apparatus UE arbitrarily selects a DR from among a set of DRs is called a mode of distributed type. For example, as for a pattern indicated as (e) in RG patterns shown in Fig. 6, a user apparatus UE to which RG9 is assigned performs DR selection by the mode of distributed type. Also, in the pattern shown as (e), RG assignment other than RG9 becomes the centralized type.

Also, in embodiments described below, a term of resource pool (RP) is used. RP is a set of DRs (including the case where the number of DR is one) assigned for each service from among the discovery resource whole region. When RP is used in the mode of distributed type, the RP corresponds to one RG. In a case where individual DR included in RP is assigned in the centralized type, each DR corresponds to RG. The embodiment described below is an embodiment in which distributed type or centralized type is properly selected for each service to efficiently utilize resources, and also is an embodiment in which RG is properly assigned to a user apparatus UE in the framework of the above-mentioned resource configuration (Fig. 5).

(Outline of the embodiment of the present invention)

As described before, it is considered that terminal-to-terminal communication (D2D) is used for various usages. For example, services are assumed for commercial usage (information distribution (advertisement, ticket sales and the like), Intelligent Transport Systems (ITS) and the like), public safety (public safety organization activity when disaster/emergency), individual use (social networking between adjacent terminals, direct data communication between terminals) and the like.

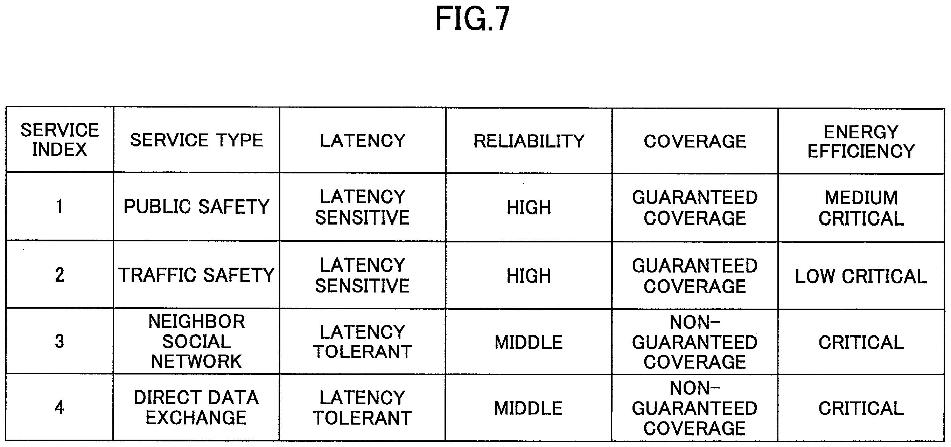

In these various services, requirements in terminal-to-terminal communication are different for each service. From the viewpoint of requirements, for example, latency, reliability, coverage, energy efficiency and the like can be considered. Fig. 7 shows examples of requirements for each service.

As an example, services can be classified into, based on "latency" requirements, Latency-Sensitive (LS) and Latency-Tolerant (LT).

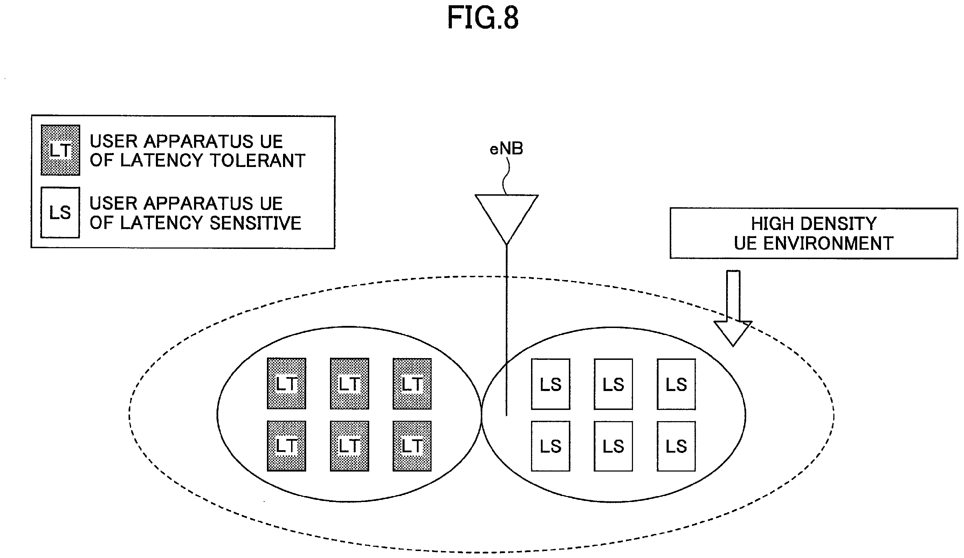

Fig. 8 shows an example of an environment in which latency-tolerant(LT) user apparatuses UE and latency-sensitive (LS) user apparatuses UE exist in high density. In Fig. 8, hatched user apparatuses UE indicate latency-tolerant(LT) user apparatuses UE (to be referred to as LT user apparatus UE, hereinafter), and non-hatched user apparatuses UE indicate latency-sensitive (LS) user apparatuses UE (to be referred to as LS user apparatus UE, hereinafter).

For example, the LT user apparatus is used for local data sharing, mobile advertisement and the like, and the LS user apparatus UE is used for traffic safety. The LT user apparatus UE can endure long waiting time (latency) and collision. On the other hand, there are strict latency requirements for the LS user apparatus UE, so that delay due to collision and the like is not permitted. Thus, the LS user apparatus UE requires assignment of larger amount of discovery resources (DR) than the LT user apparatus UE.

However, in a high density environment shown in Fig. 8, in a case where similar assignment of discovery resources is performed without distinguishing between the LS user apparatus UE and the LT user apparatus UE, for example, discovery resources are assigned similarly for the LT user apparatus UE that does not require large amount of discovery resources and the LS user apparatus UE that requires large amount of discovery resources, so that latency requirement for the LS user apparatus UE may not be satisfied. In such an environment, larger amount of discovery resources should be assigned to the LS user apparatus UE that needs larger amount of discovery resources. Also, in this case, it is necessary to decrease possibility of occurrence of collision in the LT user apparatuses UE to which relatively small amount of resources are assigned, and to improve performance of terminal-to-terminal communication.

In the present embodiment, from this viewpoint, discovery resource assignment to the LS user apparatus UE is prioritized by a support from the network (base station eNB), and, scalable and self-managed distributed type discovery resource assuagement is introduced for the LT user apparatus UE, so that discovery resources can be utilized more efficiently.

In the following, a first embodiment and a second embodiment of the present invention contrived from the above-mentioned viewpoint are described.

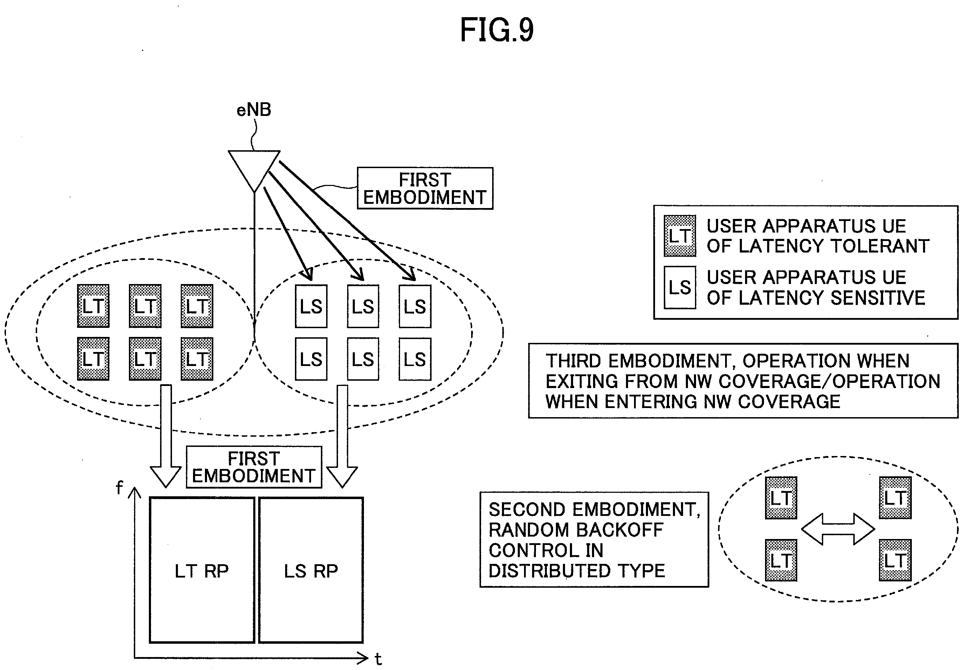

In addition, a technique described in a third embodiment is proposed as an operation example performed when exiting from a NW coverage / when entering the NW coverage. Outline of each embodiment is described by referring to Fig. 9.

In the first embodiment, a new signaling is introduced for clustering user apparatuses UE based on service types, and a new signaling is introduced for partitioning discovery resources into resource pools assigned to each UE cluster. Further, in the first embodiment, a new signaling is introduced for performing discovery resource assignment of the centralized type.

In the second embodiment, backoff control is introduced for performing discovery resource selection by the distributed type in the UE cluster of LT (latency tolerant), for example, and a new signaling for this is introduced.

In the third embodiment, an operation example of a user apparatus UE is described in a case where the user apparatus UE goes out of a NW coverage, and an operation example of the user apparatus UE is described in a case where the user apparatus UE enters the NW coverage from the outside.

In the following, each embodiment is described in detail.

(First embodiment)

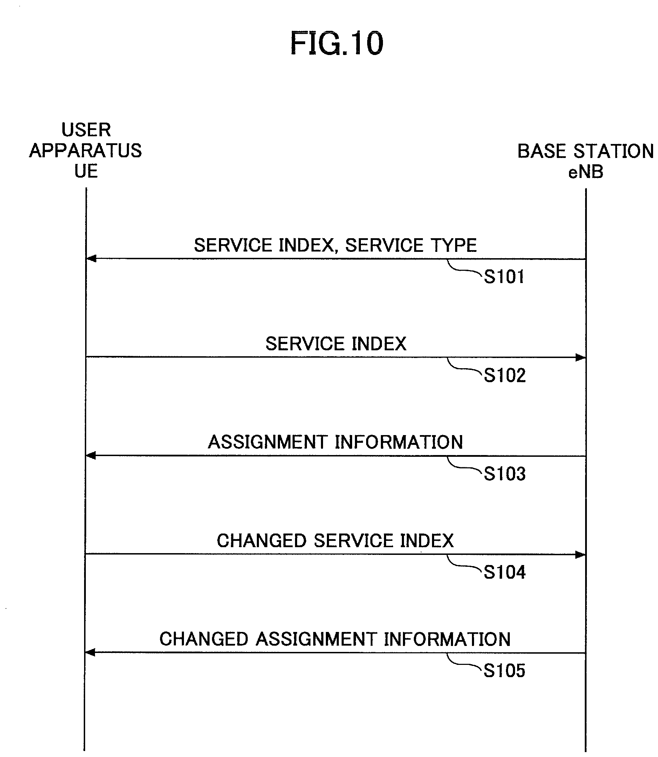

Process content in the first embodiment is described along the procedure shown in Fig. 10.

In the present embodiment, the base station eNB holds, in an after-mentioned data storage unit 105, a mapping table where service indexes are associated with service types and requirements as shown in Fig. 7. It is not necessary that the base station eNB holds all fields of the table shown in Fig. 7, and it is only necessary to hold fields necessary for determination process and information transmission process to the user apparatus UE.

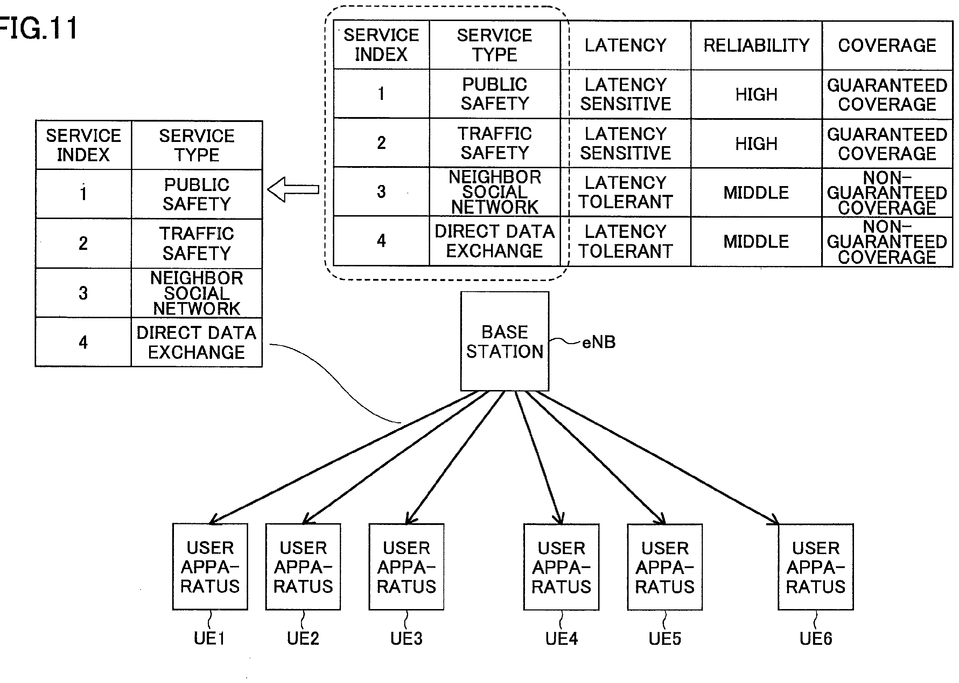

In step 101 of Fig. 10, as shown in Fig. 11, the base station eNB transmits a mapping table in which a service index is associated with a service type to each user apparatus UE. Any signaling may be used for the signaling for transmitting the information. For example, the base station eNB broadcasts the mapping table to each user apparatus UE by using SIB (system information). Also, the base station eNB may broadcast the mapping table to each user apparatus UE by using cell-specific downlink RRC signaling to each user apparatus UE.

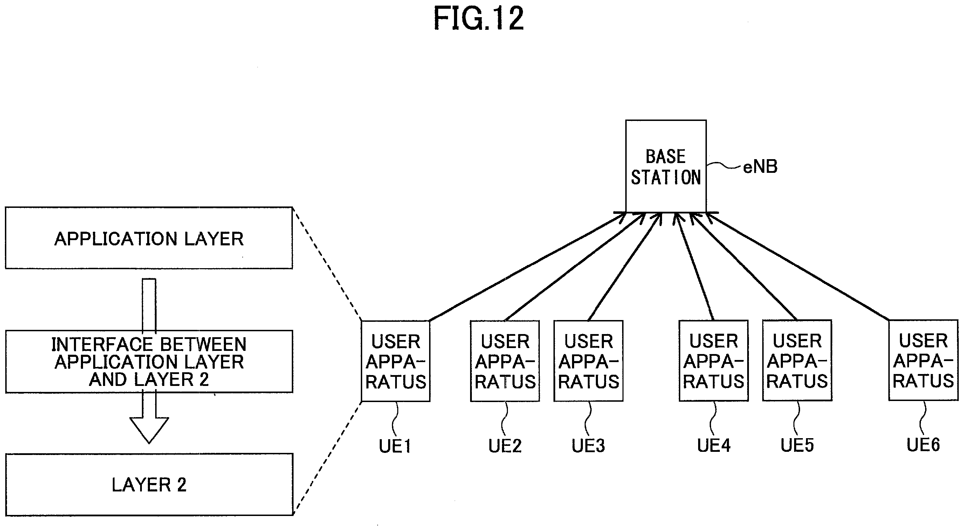

Next, in step 102 of Fig. 10, as shown in Fig. 12, each user apparatus UE that receives the mapping table from the base station eNB transmits, to the base station eNB, a service index of a service (application) related to terminal-to-terminal communication of itself based on the mapping table. This signaling is performed by an UE-specific uplink signaling, for example. More specifically, for example, this signaling can be performed by using PUSCH, PUCCH and the like.

As to the user apparatus UE1, an operation example within the user apparatus UE is shown. Similar operation is executed in other user apparatuses UE. As shown in the figure, a service type is passed to a layer 2 via a predetermined interface from an application layer of the user apparatus UE1, so that the user apparatus UE1 transmits the service index to the base station eNB in layer 2 by using a channel such as PUCCH, PUSCH and the like.

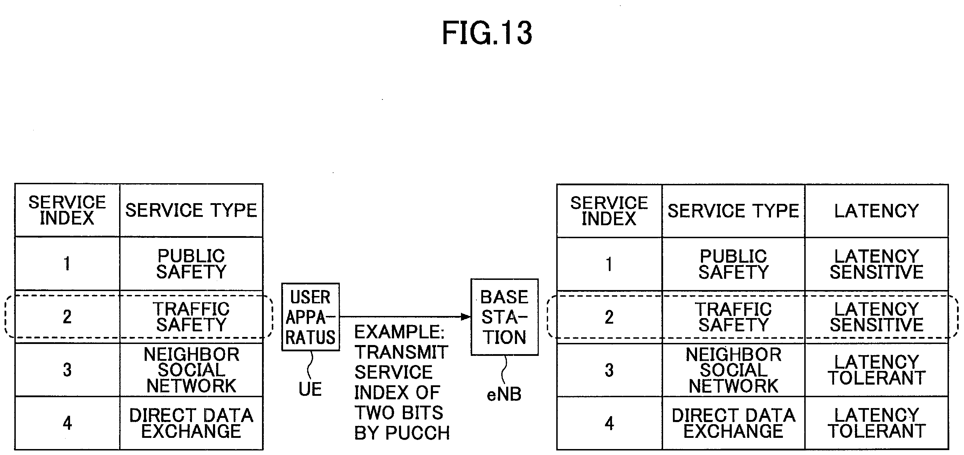

Fig. 13 shows a more detailed example. In the example shown in Fig. 13, 2 bits are used as an service index, and information (which is 2 in the example shown in the figure) of the 2 bits is transmitted to the base station eNB using PUCCH.

The base station eNB that receives the service index can ascertain a requirement of each user apparatus UE based on the holding table (example: table shown in Fig. 7). That is, for example, the base station eNB can determine whether each user apparatus UE is an LS user apparatus UE or an LT user apparatus UE.

The base station eNB executes UE clustering and RP partitioning (division) based on reported information of the service index from each user apparatus UE, determines DR assignment mode, RP partition identification information for each service index, and transmits the determined information to each user apparatus UE (step 103 of Fig. 10). The information may be transmitted to each use apparatus UE by an individual signaling, or may be broadcasted to the whole user apparatuses UE. In the present embodiment, the information is broadcasted. That is, broadcast signaling is used. By using broadcast signaling, overhead can be reduced compared with the case of the individual signaling. As concrete methods for broadcast signaling, SIB may be used, or cell-specific downlink RRC signaling may be used.

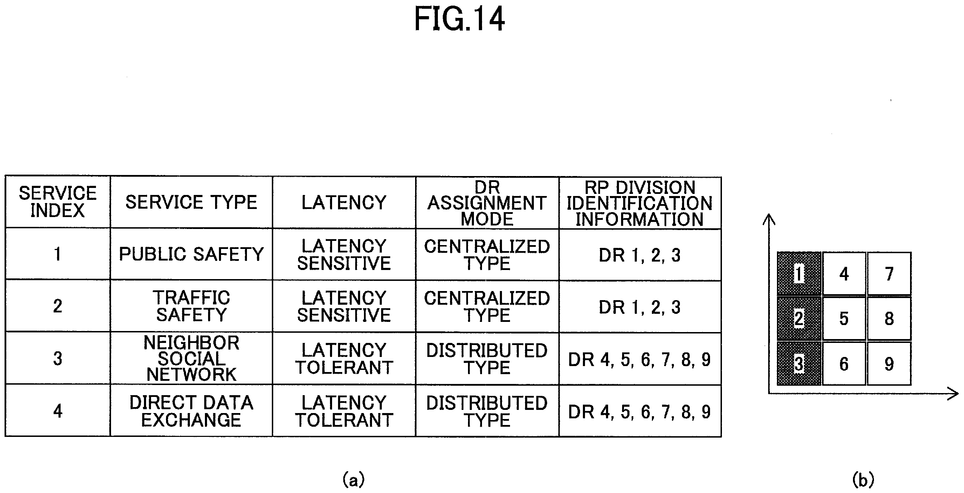

Fig. 14(a) shows examples of DR assignment mode and RP partition identification information determined by the base station eNB based on information of the service index from each user apparatus UE. In the example shown in Fig. 14(a), for example, for the service index 1 (public safety), the DR assignment mode is the centralized type, and the RP partition identification information is DR1, 2, 3. In the present embodiment, the DR assignment mode is the centralized type or the distributed type, and the RP partition identification information is identification information of DRs that form a RP assigned to the service. However, the DR assignment mode and the RP partition identification information are merely examples. The base station eNB may determine information other than these pieces of information as a result of UE clustering and RP partitioning, and may further add information to these pieces of information. For example, the base station eNB may add an RP partition mode indicating a partitioning method of RP.

Fig. 14(b) shows an RP partitioning example corresponding to Fig. 14(a). In the example shown in Fig. 14(a) and Fig. 14(b), DRs 1, 2 and 3 are assigned to user apparatuses UE of service indexes 1 and 2 by the centralized type, and DRs 4, 5, 6, 7, 8 and 9 are assigned to user apparatuses UE of service indexes 3 and 4 by the distributed type.

In the present embodiment, when a service is changed in the user apparatus UE, the user apparatus UE transits a changed service index to the base station eNB (step 104 of Fig. 10). The base station eNB that receives the service index performs UE clustering and RP partitioning based on the changed service index, and broadcasts DR assignment mode and RP partition identification information for each changed service (step 105 of Fig. 10).

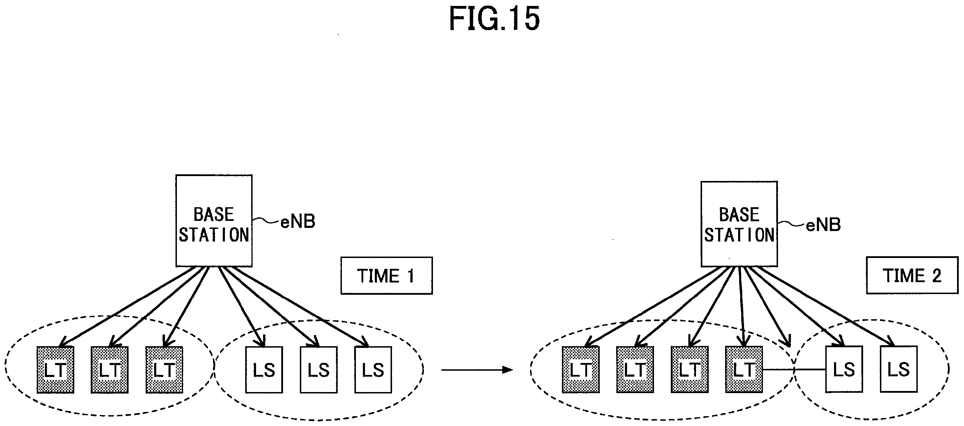

In the example shown in Fig. 15, the number of LT user apparatuses UE is 3, and the number of LS user apparatuses UE is 3 at a time 1. Then, at a time 2 after a time period, the number of LT user apparatuses UE is 4, and the number of LS user apparatuses UE is 2. In this case, notification of step 104 of Fig. 10 is performed between time 1 and time 2, and at the time 2, the base station eNB transmits assignment information according to service type configuration of user apparatuses UE at the time 2.

Pieces of information transmitted from the base station eNB to each user apparatus UE for DR assignment in steps 103 and 105 are DR assignment mode and RP partition identification information for each service index in information shown in Fig. 14(a), for example.

Each user apparatus UE that receives these pieces of information identifies a DR assignment mode and RP corresponding to a service of itself. A user apparatus UE to which the distributed type is assigned as a DR assignment mode can perform discovery signal transmission by arbitrarily selecting a DR from among the notified RP. As for a user apparatus UE to which the centralized type is assigned as a DR assignment mode, the base station eNB may, for each discovery period, assign a DR by selecting the DR from among an assigned RP and by notifying individual user apparatus UE of the DR, or the base station eNB may perform assignment by transmitting an assignment pattern of a period and a repetition cycle. An example of an assignment method in the case of the centralized type is described later. Also, backoff control in the distributed type is described in the second embodiment.

<On UE clustering, mode selection, RP partitioning>

In the following, processes (processes for determining DR assignment mode, RP partition identification information and the like) of UE clustering and the like which are executed by the base station eNB based on information of the service index and the like received from the user apparatus UE are described.

The base station eNB performs UE clustering by categorizing user apparatuses UE having the same service index into a group (cluster). Also, the base station eNB determines the DR assignment mode and RP assignment based on the total number of user apparatuses UE under the base station eNB, the number of user apparatuses UE in a cluster for each service, and a requirement of the service and the like. The base station eNB basically determines DR assignment for a user apparatus UE of a service corresponding to latency sensitive (LS) to be "centralized type", and determines DR assignment for a user apparatus UE of a service corresponding to latency tolerant (LT) to be "distributed type". But, when the total number of user apparatuses UE is less than the number of usable DRs, DR assignment for all user apparatuses UE may be performed by the centralized type. In the following, although three examples are described, these are merely examples.

Case 1) When the total number of user apparatuses UE is greater than the total number of DRs

In this case, for example, the base station eNB assigns a set of DRs of the number of LS user apparatuses UE to the LS user apparatuses UE as an RP, and assigns one DR from the RP to each LS user apparatus UE in the centralized type. Then, the base station eNB assigns RP including the remaining DRs to LT user apparatuses UE by the distributed type. However, this case is applied when the total number of LS user apparatuses UE is less than the total number of DRs.

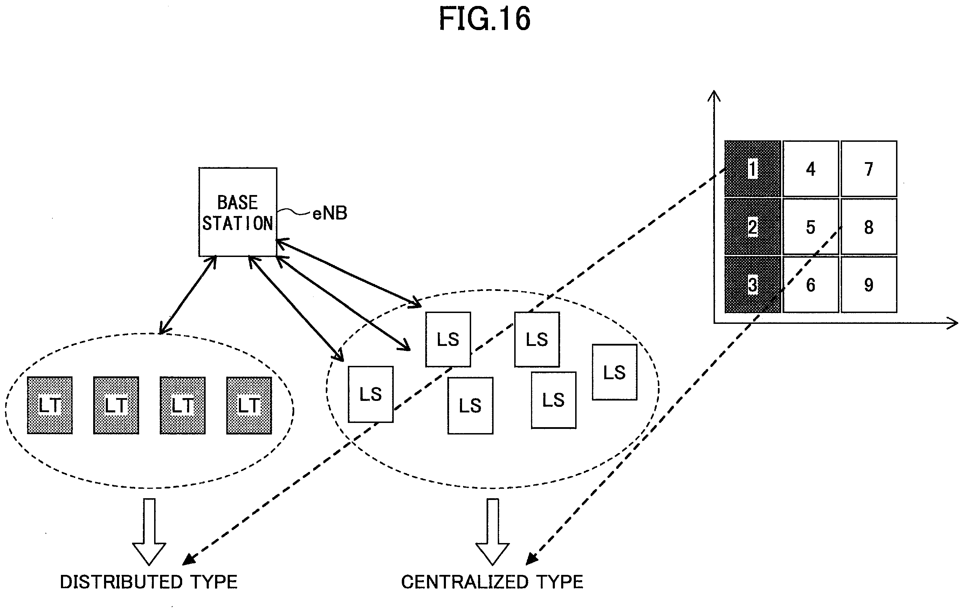

Fig. 16 describes a concrete example. In this example, the number of the user apparatuses UE connected to the base station eNB is 10 which is greater than the total number 9 of DRs. Then, 6 LS user apparatuses UE and 4 LT user apparatuses UE are clustered. In this case, as mentioned above, one DR is assigned to each of the 6 LS user apparatuses UE, and the remaining 3 DRs are assigned to the 4 LT user apparatus UE by the distributed type.

Case 2) When the total number of user apparatuses UE is equal to or less the total number of DRs

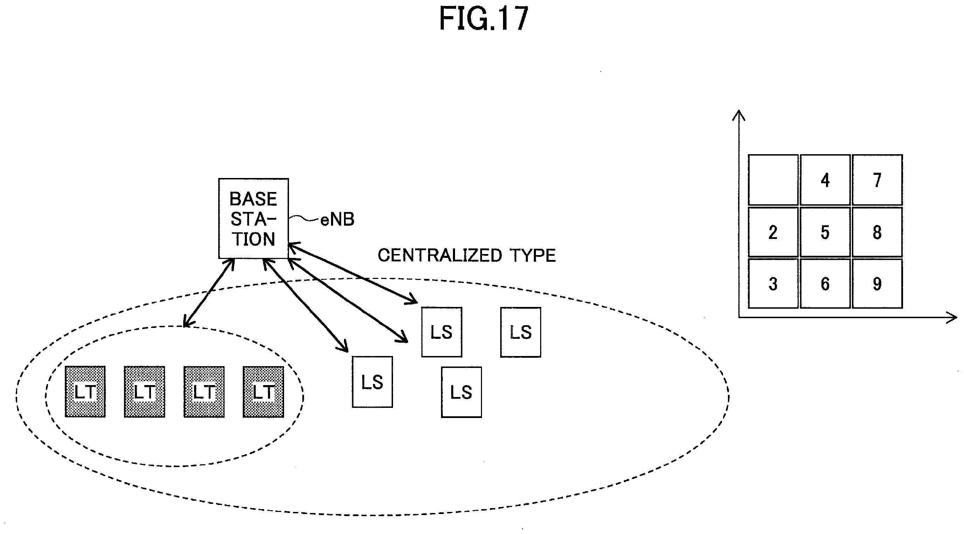

In this case, since a sufficient number of DRs exists, one DR can be assigned to each user apparatus UE. That is, assignment for all user apparatuses UE is performed by the centralized type. A concrete example in this case is shown in Fig. 17. In the example of Fig. 17, the total number of user apparatuses UE is 8, and the total number of DRs is 9. Thus, one DR can be assigned to each user apparatus UE.

Case 3) When the number of LS user apparatuses UE is equal to or greater than the total number of DRs

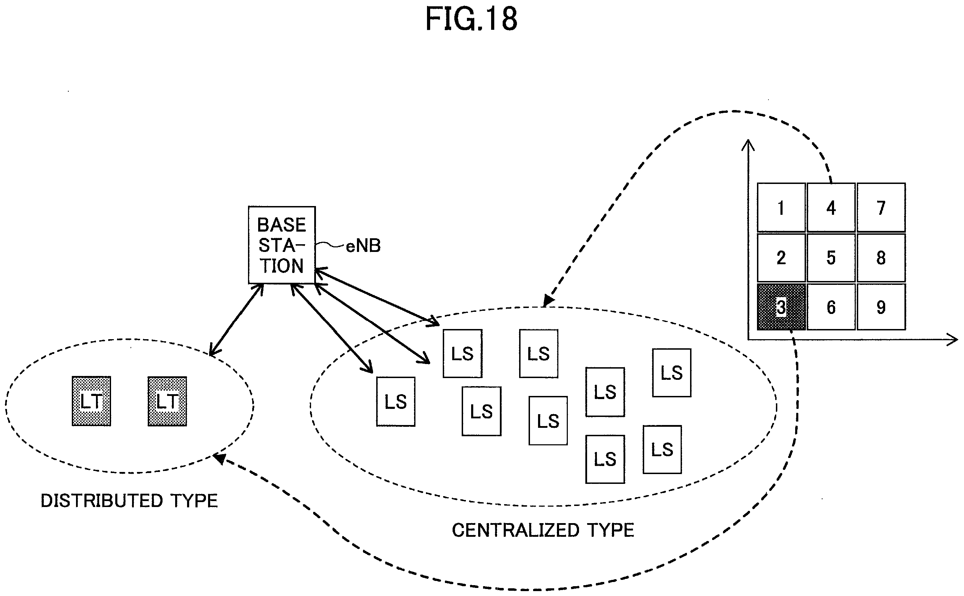

In this case, a number of DRs of a predetermined percentage (%) of total DRs are assigned to LT user apparatuses UE in the distributed type, and remaining DRs are assigned to the LS user apparatuses UE. In the example shown in Fig. 18, one DR is assigned to 2 LT user apparatuses UE, and remaining 8 DRs are assigned to 9 LS user apparatuses UE.

<DR assignment example in the centralized type>

Next, a DR assignment example in the centralized type is described. In this example, a detailed process example is described when assigning DRs in assigned RP (to be referred to as LS-RP hereinafter) to LS user apparatuses UE by the centralized type. However, the process described here can be generally used when assigning DR to a user apparatus UE from among a set of DRs by the centralized type irrespective of presence or absence of the process already described in the first embodiment.

The base station eNB assigns one DR from among LS-RP to each LS user apparatus UE. However, when the total number of the LS user apparatuses UE is greater than the total number of DRs of the LS-RP, DR cannot be assigned to all LS user apparatuses UE in one discovery period.

In such a case, the base station eNB assigns a UE-specific time-frequency region transmission pattern to each LS user apparatus UE. Each LS user apparatus UE to which the assignment is performed monitors each discovery period (performs discovery signal reception), but, performs transmission of a discovery signal only in a period assigned by the above-mentioned pattern.

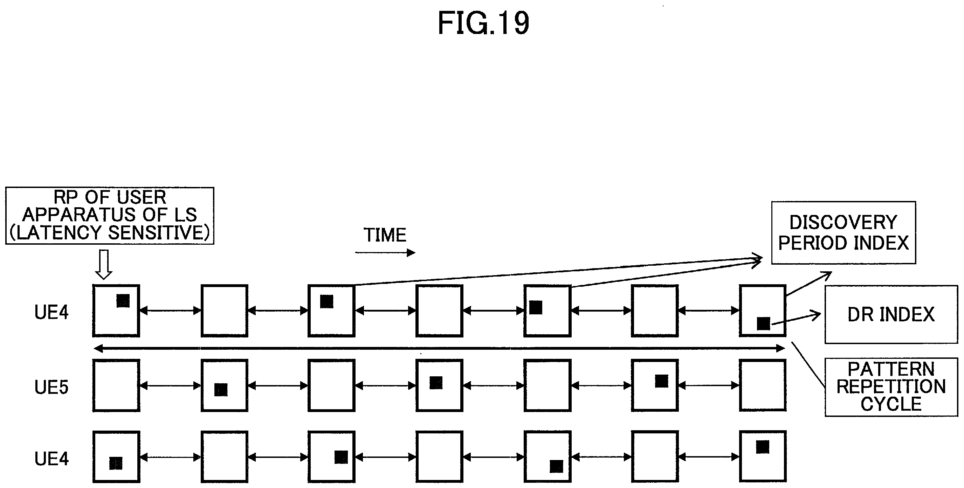

An operation example of 3 user apparatuses UE4, UE5 and UE 6 to which a pattern is assigned is described with reference to Fig. 19. The example shown in Fig. 19 is an example in which, due to lack of the number of DRs, only 2 user apparatuses UE of the 3 user apparatuses UE can transmit a discovery signal at the same time in one discovery period. Each user apparatus UE is assigned a time-frequency region transmission pattern such that 2 user apparatuses UE can be assigned a DR in the same discovery period.

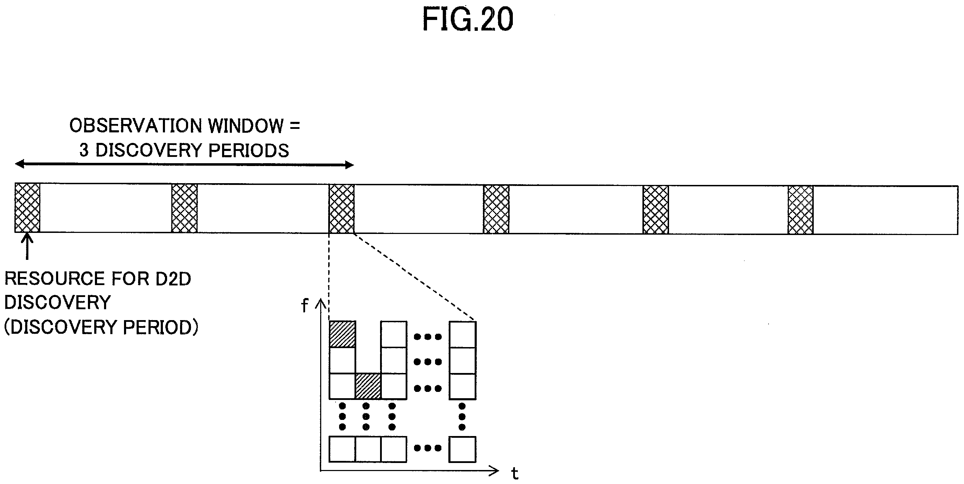

Such information of the pattern can be transmitted from the base station eNB to each target LS user apparatuses UE by a UE-specific RRC signaling, for example. The information of the patter transmitted by the signaling to each user apparatus UE includes, for example, an index for identifying a discovery period used for discovery signal transmission, an index of DR used for each discovery period, and a cycle for repeating the pattern. The user apparatus UE that receives the pattern information performs discovery signal transmission using the specified DR in the discovery period specified by the discovery period index.
Also, the user apparatus UE repeats this operation at a specified cycle.
In the present embodiment, for DR assignment in the centralized type, the base station eNB monitors utilization status of DRs so as to adjust DR assignment. More particularly, for example, as shown in Fig. 20, a collision ratio of DR is monitored over a predetermined observation window (3 discovery periods in this example). The collision ratio of DR is a ratio of DRs, in all DRs, where collision (meaning that a plurality of discovery signals are transmitted) is detected. This collision ratio may be called congestion degree. Further, the base station eNB monitors discovery signals transmitted by user apparatuses UE so as to estimate discovery latency of each service and the number of user apparatuses UE to be discovered. Then, the base station eNB updates the DR assignment pattern for each user apparatus UE by the centralized type to optimize the DR assignment pattern. For example, when congestion degree is higher than a predetermined value, the base station eNB can set parameters such that the interval at which each user apparatus UE transmits a discovery signal is increased.

<Apparatus configuration>

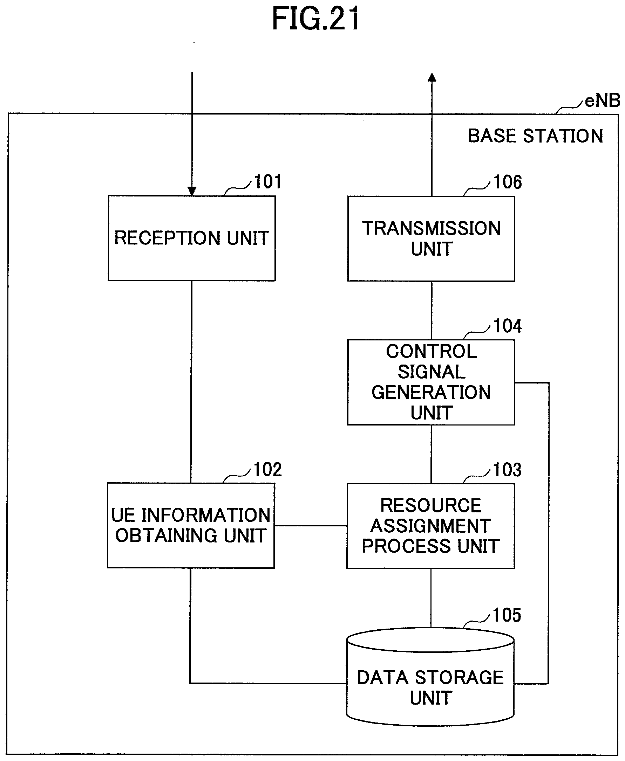

Fig. 21 shows a configuration example of the base station eNB in the first embodiment. As shown in Fig. 21, the base station eNB includes a reception unit 101, a UE information obtaining unit 102, a resource assignment process unit 103, a control signal generation unit 104, a data storage unit 105 and a transmission unit 106.
The reception unit 101 receives a signal transmitted from a user apparatus UE by radio. The UE information obtaining unit 102 obtains information (service index, congestion information, discovery UE information, and the like) from a signal received from the user apparatus UE.
The resource assignment process unit 103 performs UE clustering, mode selection, and RP partitioning as described so far based on the table (example: Fig. 7) that is stored in the data storage unit 105, and a service index and the like received from the user apparatus UE, and generates information shown in Fig. 14(a), for example, and stores the information in the data storage unit 105. Also, the resource assignment process unit 103 also includes functions for performing assignment process in the centralized type described with reference to Fig. 19, and determining parameters shown in Fig. 19.
The control signal generation unit 104 generates a control signal including information (example: information of Fig. 14(a), parameters in Fig. 19 and the like) determined by the resource assignment process unit 103. Also, the control signal generation unit 104 includes a function for generating a control signal including a mapping table of a service index and a service type shown in Fig. 11. The transmission unit 106 transmits a control signal and the like generated by the control signal generation unit 104 to a user apparatus UE by radio.

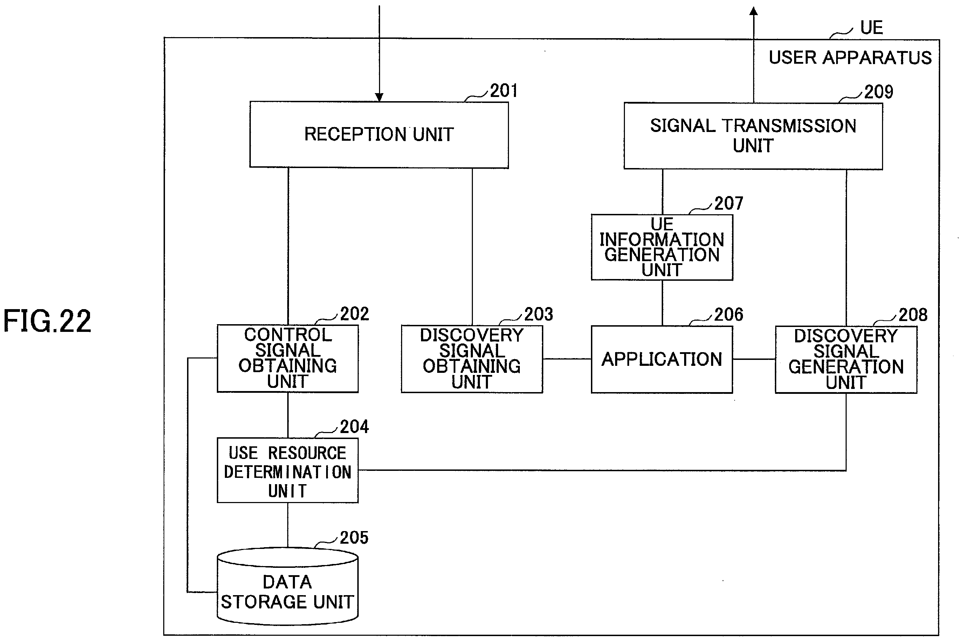

Fig. 22 shows a block diagram of a user apparatus UE in the first embodiment. As shown in Fig. 22, the user apparatus UE includes a reception unit 201, a control signal obtaining unit 202, a discovery signal obtaining unit 203, a use resource determination unit 204, a data storage unit 205, an application 206, a UE information generation unit 207, a discovery signal generation unit 208, and a transmission unit 209.

The reception unit 201 receives a signal from the base station eNB or another user apparatus UE by radio. The control signal obtaining unit 202 obtains information of a control signal (example: mapping table of Fig. 11, assignment information of Fig. 14(a), parameter of Fig. 19 and the like) from the signal received by the reception unit 201, and stores the information in the data storage unit 205. The discovery signal obtaining unit 203 obtains information of a discovery signal from a received signal.

The use resource determination unit 204 determines a resource to be used for discovery signal transmission based on assignment information stored in the data storage unit 205, service index and the like of the user apparatus UE itself. The discovery signal generation unit 208 generates a discovery signal by using a resource determined by the use resource determination unit 204, and transmits it from the transmission unit 209. For example, in a case where transmission shown in Fig. 19 is performed, the parameters shown in Fig. 19 are stored in the data storage unit 205, so that the use resource determination 204 refers to the parameters to determine a discovery period for transmitting a discovery signal, and a resource such as DR, and the discovery signal generation unit 208 generates a discovery signal in the resource.

The application 206 is a functional unit for performing a process on a service of D2D communication. The UE information generation unit 207 generates a control signal including a service index corresponding to the application 206 in use. The transmission unit 209 transmits a control signal including a service index to the base station eNB.

As described above, the base station eNB in the present embodiment is configured as a base station configured to communicate with a user apparatus having a function for performing device-to-device communication by radio, including:

an information transmission unit (example: the control signal transmission unit 104, the transmission unit 106) configured to transmit mapping information, to the user apparatus, in which service identification information on device-to-device communication is associated with a service type;
an information reception unit (example: the reception unit 101, the UE information obtaining unit 102) configured to receive, from the user apparatus, service identification information corresponding to a service type of the user apparatus; and
a resource assignment process unit (example: the resource assignment process unit 103, the control signal generation unit 104, the transmission unit 106) configured to determine resource assignment used for device-to-device communication for each service based on the service identification information received from the user apparatus, and to transmit information indicating the resource assignment to the user apparatus.

The resource assignment process unit is configured, for example, to determine, as the resource assignment, a set of resources and a method for assigning the set of resources for each service. Accordingly, by determining a set of resources and a method for assigning the set of resources for each service, it becomes possible to realize resource assignment considering difference of services.

The resource assignment process unit is configured to determine, as the method for assigning the set of resources, for example, a distributed type to cause the user apparatus to arbitrarily select a resource from among the set of resources, or a centralized type to designate a particular resource from among the set of resources to the user apparatus. By determining a distributed type or a centralized type, it becomes possible to realize resource assignment suitable for characteristics of the service.

For example, for a plurality of user apparatuses corresponding to a service type to which the set of resources is assigned by the centralized type, the resource assignment process unit is configured to assign resources to the plurality of user apparatuses such that only a part of user apparatuses in the plurality of user apparatuses can use a resource in one discovery period. By performing assignment in this way, even when the number of usable resources is less than the number of the user apparatuses UE, it is possible to perform transmission and reception of a discovery signal by avoiding collision.

Also, according to the present embodiment, there is provided a user apparatus, having a function for performing device-to-device communication by radio, configured to communicate with a base station. The user apparatus includes:

an information transmission unit (example: the UE information generation unit 207, transmission unit 209) configured to transmit, to the base station, service identification information corresponding to a service type of device-to-device communication of the user apparatus;
an information reception unit (example: the reception unit 201, the control signal obtaining unit 202) con-

9

figured to receive, from the base station, information indicating resource assignment that is determined based on the service identification information; and a resource determination unit (example: the use resource determination unit 204) configured to determine a resource to be used for transmitting a discovery signal in device-to-device communication based on the information indicating the resource assignment.

For example, before the information transmission unit transmits the service identification information, the information reception unit receives mapping information in which service identification information on device-to-device communication is associated with a service type. Accordingly, by receiving mapping information in which service identification information is associated with a service type, the user apparatus can determine service identification information of itself. Also, even when there is a change in the correspondence between the service identification information and the service type, by receiving mapping information in which service identification information is associated with a service type, that change can be handled.

The information reception unit is configured to receive, for example, as the information indicating the resource assignment, information indicating, for each service, a set of assigned resources and a method for assigning the set of resources.

Also, as described in the third embodiment, the user apparatus may further includes a coverage judgement unit configured to determine whether the user apparatus goes out of a coverage of the base station; and a use band determination unit configured, when the coverage judgement unit determines that the user apparatus goes out of the coverage, to determine a band to be used for device-to-device communication from among a plurality of bands that are predetermined for device-to-device communication. By providing the coverage judgement unit and the use band determination unit, even when the user apparatus goes out of NW coverage, the user apparatus can perform terminal-to-terminal communication by using a proper band.

(Second embodiment)

Next, a second embodiment is described with reference to figures. The second embodiment describes detailed process examples when a user apparatus UE that receives assignment of the distributed type in the first embodiment arbitrarily selects a DR in the assigned resource pool (RP). However, the process using backoff control described in the second embodiment can be generally used for selecting a DR from a set of DRs by the user apparatus UE irrespective of presence or absence of the process of the first embodiment.

In the second embodiment, user apparatuses UE are assigned a RP including a plurality of DRs. Each user apparatus UE performs backoff control when arbitrarily selecting a DR from the RP.

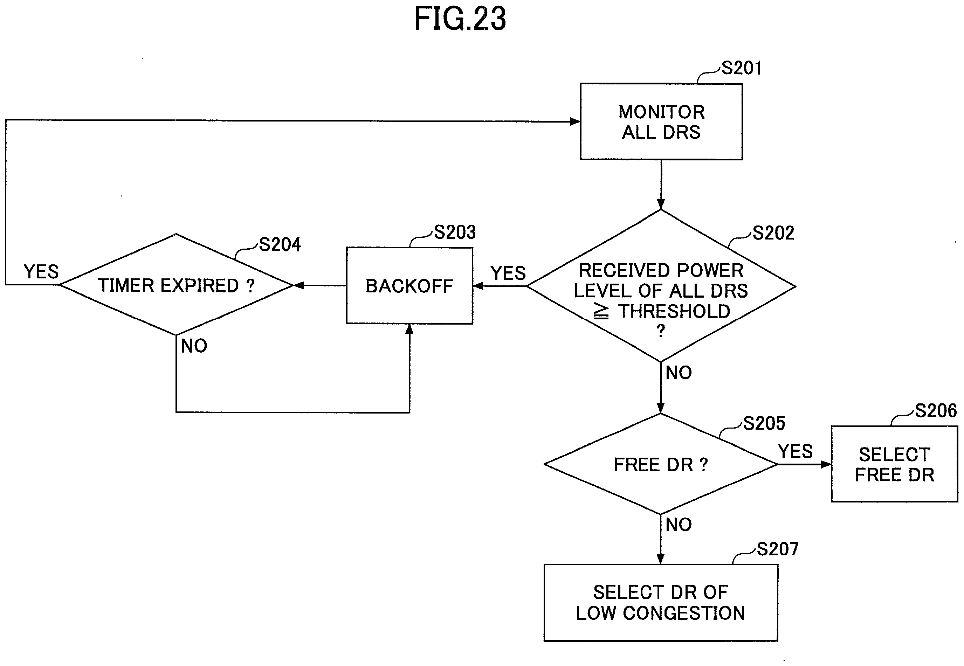

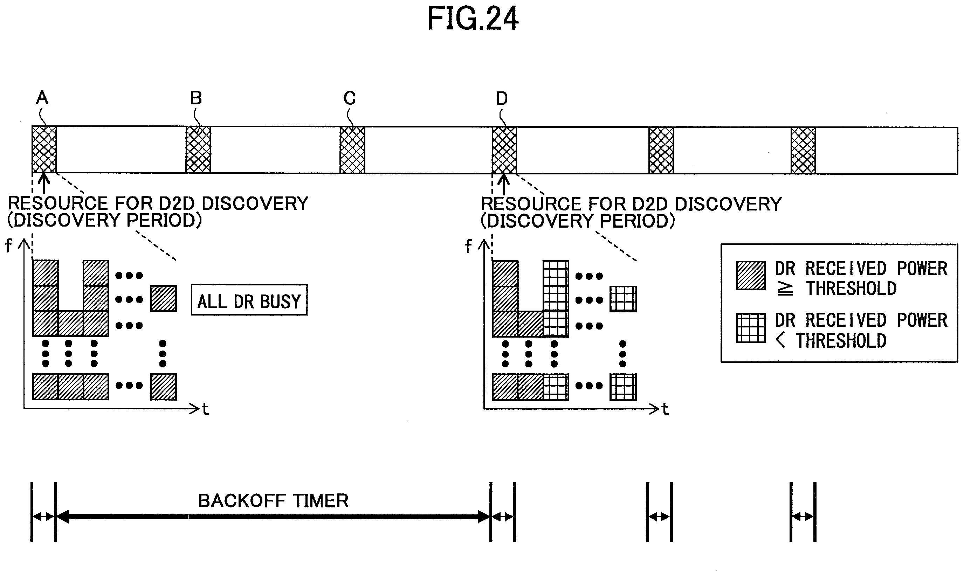

An operation example of the user apparatus UE in the present embodiment is described with reference to a flowchart of Fig. 23 and to Fig. 24.

In the discovery period, the user apparatus UE monitors (state detection) all usable DRs (step 201). The user apparatus UE determines whether received power level (energy level) of every DR is equal to or greater than a predetermined threshold (step 202).

In step 202, when it is determined that received power level of every DR is equal to or greater than the predetermined threshold (Yes in step 202), the process goes to step 203, and the user apparatus UE performs backoff control. It is merely an example that the condition for performing backoff control is that the received power level of every DR is equal to or greater than a predetermined threshold, and other conditions may be used.

In the backoff control, the user apparatus UE selects (example: randomly selects) a backoff window size from among numbers from 1 to w, sets a backoff timer of a time period corresponding to the backoff window size, and performs backoff. The above-mentioned w is a maximum value of a backoff window size reported from the base station eNB to the user apparatus UE, and is an integer equal to or greater than 1. When the backoff timer expires (Yes in step 204), the user apparatus UE performs operation of step 201.

The backoff control is described more specifically with reference to Fig. 24. At the time point of a discovery period indicated by A, it is assumed that the user apparatus UE detects that the received power level of every DR is equal to or greater than the threshold. In this example, the user apparatus UE selects 2 as a backoff window size, and sets and starts the backoff timer so as not to transmit a discovery signal in discovery periods of two times from the next time (B and C shown in Fig. 24). Before the backoff timer expires, the user apparatus UE performs reception of a discovery signal, but does not perform transmission of a discovery signal. When it becomes a discovery period after the backoff timer expires, the user apparatus UE performs discovery signal transmission (the time point of D of Fig. 24).

Returning to Fig. 23, in step 202, when it is not determined that the received power level of every DR is equal to or greater than the threshold (No in step 202), the process goes to step 205. In step 205, the user apparatus UE determines whether there is a free DR (DR which is not used by another UE) based on received power level of DR and the like.

When it is determined that there is a free DR in step 205 (Yes in step 205), the user apparatus UE arbitrarily (example: randomly) selects one DR from among free DRs, and performs transmission of a discovery signal by using the DR (step 206).

When it is determined that there is no free DR in step 205 (No in step 205), the user apparatus UE selects a DR in which congestion degree is low, and performs transmission of a discovery signal (step 207). As a method for selecting the DR of the low congestion degree, DR is selected with a probability inversely proportional to the size of the DR received power level. The probability inversely proportional to the size of the DR received power level can be represented by the following equation in which $P_i$ is a received power level of $DR_i$. The user apparatus UE selects $DR_i$ with a probability of a value indicated by the following equation.

[Equation 1]

$$\frac{\dfrac{1}{P_i}}{\sum_{j=1,2\ldots}\dfrac{1}{p_1}+\dfrac{1}{p_2}+\dfrac{1}{p_3}\ldots\dfrac{1}{p_i}\ldots\dfrac{1}{p_j}}$$

Fig. 24 shows a concrete operation example when the determination in step 202 is No. In the example of Fig. 24, at a discovery period indicated by D, the user apparatus UE detects that there is a DR whose received power level is less than a predetermined threshold, and performs transmission of a discovery signal as described in the above-mentioned step 206 or step 207.

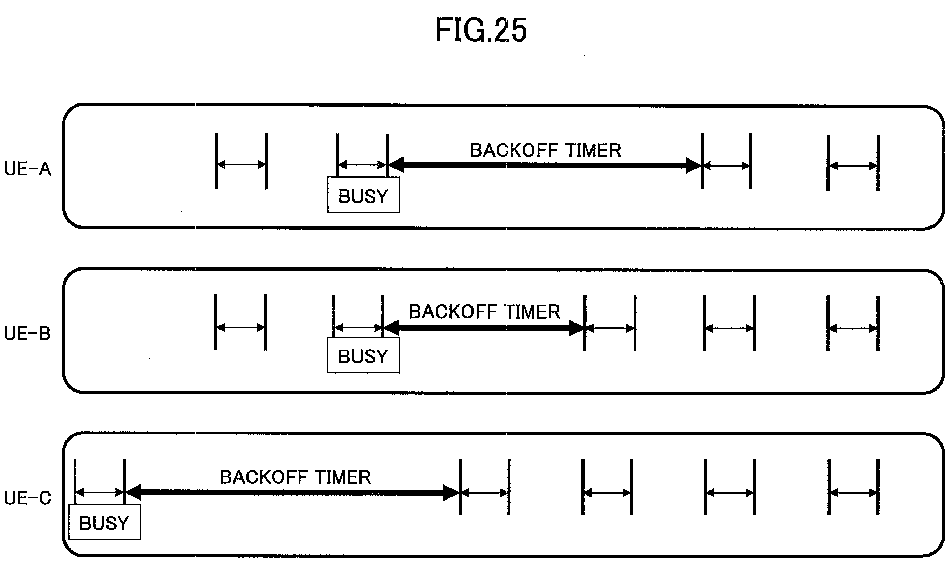

By performing the above-mentioned backoff control by each user apparatus UE, as shown in Fig. 25, for example, since transmission of a discovery signal is suppressed during a period when a user apparatus UE enters the backoff, busy state is eased, so that a user apparatus UE that is not in the backoff state can perform discovery signal transmission, thus, transmission and reception of a discovery signal can be performed by efficiently using discovery resources as a whole.

<Signaling>

In the present embodiment, the base station eNB transmits a mapping table in which service indexes are associated with maximum backoff window sizes to a user apparatus UE performing assignment of the distributed type (example: LT user apparatus UE in the first embodiment). Although the method of transmission is not limited to a particular method, in the present embodiment, the base station eNB transmits (broadcasts) the mapping table by broadcasting using a SIB, or broadcasting using cell-specific downlink RRC signaling.

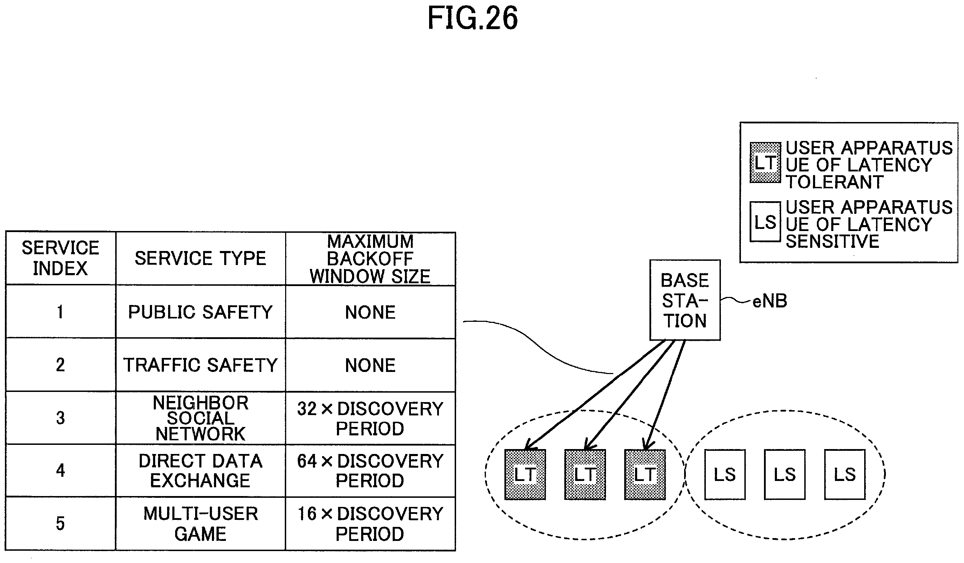

Fig. 26 shows an example of the mapping table transmitted to each user apparatus UE from the base station eNB. As shown in Fig. 26, for example, for a service of service index 1 for which latency is not allowed, backoff is not allowed. For a service of service index 4 for which relatively large latency is allowed, a large maximum backoff window size is associated.

As mentioned above, by setting a maximum backoff window size for each service, it becomes possible to realize, for each service in the mode of the distributed type, selection control of DR applicable to requirement of the service. For example, in a multiple user game, since latency requirement is strict, relatively small maximum backoff window size is assigned.

The base station eNB may hold the mapping information of services and maximum backoff window sizes in a fixed manner, or may change the mapping information dynamically. When changing the mapping information dynamically, for example, as described in the first embodiment, the base station eNB detects the number of user apparatuses UE of each service based on a service index received from each user apparatus UE, so that the base station eNB can determine a maximum backoff window size according to the number. For example, in the table of Fig. 26, in each of service indexes 3, 4 and 5, when the number of user apparatuses UE belonging to the service is less than a predetermined value, the maximum backoff window size may be set to be a small value, or the maximum backoff window size may be set to be "none" such that backoff is not performed.

Also, the base station eNB may detect utilization status of each DR by monitoring DR so as to dynamically change the maximum backoff window size. More particularly, for example, as shown in Fig. 20, the base station eNB monitors collision ratio of DR over a predetermined observation window (three discovery periods in the present embodiment). The collision ratio of DR is a ratio of DRs, in all DRs, where collision (meaning that a plurality of discovery signals are transmitted) is detected. This collision ratio may be called congestion degree. Further, the base station eNB monitors a discovery signal transmitted from the user apparatus UE so as to estimate discovery delay of each service and the number of discovered user apparatuses UE. Then, the base station eNB dynamically changes the maximum backoff window size based on the estimated information, to optimize the maximum backoff window size. For example, when the congestion degree is higher than a predetermined value, the base station eNB can set the maximum backoff window size of a distributed type service to be a small value.

<Apparatus configuration>

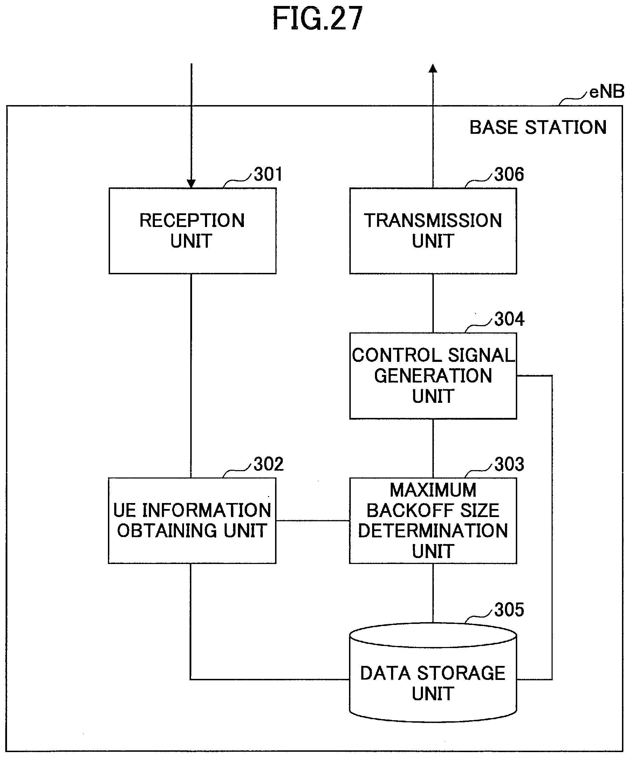

Fig. 27 shows a configuration diagram of the base station eNB that executes above-mentioned processes in the second embodiment.

As shown in Fig. 27, the base station eNB in the second embodiment includes a reception unit 301, a UE information obtaining unit 302, a maximum backoff size determination unit 303, a control signal generation unit 304, a data storage unit 305 and a transmission unit 306.

The reception unit 301 receives a signal transmitted from a user apparatus UE by radio. The UE information obtaining unit 302 obtains information (service index, congestion information, and the like) from a signal received from the user apparatus UE.

The maximum backoff size determination unit 303 determines a maximum backoff size for each service based on table (example: Fig. 7) stored in the data storage unit 305 and service indexes received from user apparatuses UE and the like, and stores mapping information in the data storage unit 305. Also, the maximum backoff size determination unit 303 includes functions of the resource assignment process unit 103 of the first embodiment.

The control signal generation unit 304 generates a control signal including mapping information generated by the maximum backoff size determination unit 303, and the like. Also, the control signal generation unit 304 includes functions of the control signal generation unit 104 in the first embodiment. The transmission unit 306 transmits a control signal and the like generated by the control signal generation unit 304 to a user apparatus UE by radio.

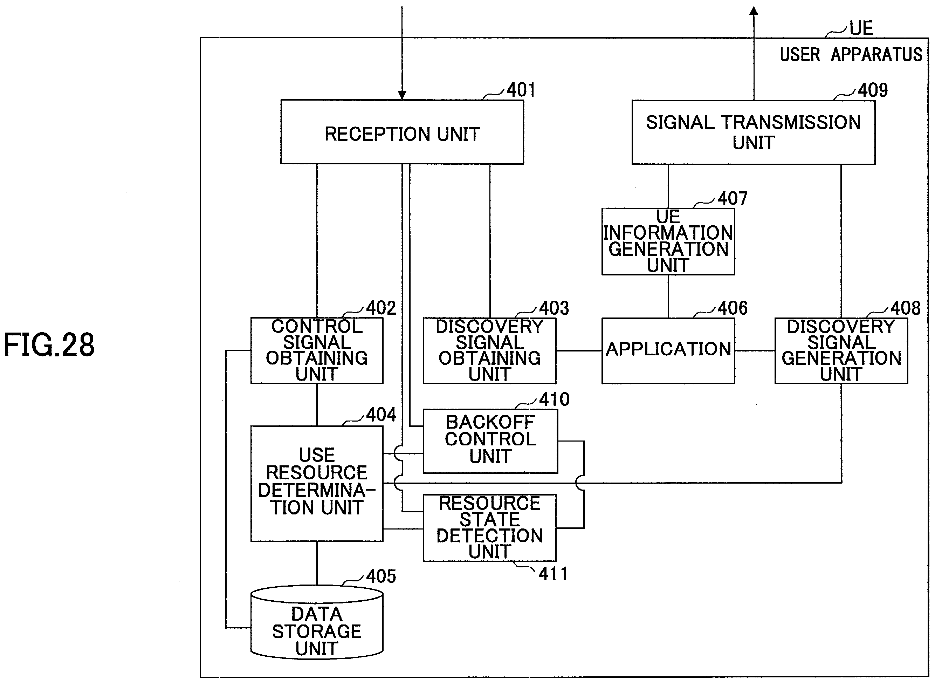

Fig. 28 shows a block diagram of a user apparatus UE that performs the above-mentioned processes in the second embodiment. As shown in Fig. 28, the user apparatus UE in the second embodiment includes a reception unit 401, a control signal obtaining unit 402, a discovery signal obtaining unit 403, a use resource determination unit 404, a data storage unit 405, an application 406, a UE information generation unit 407, a discovery signal generation unit 408, a transmission unit 409, a backoff control unit 410, and a resource state detection unit 411.

The reception unit 401 receives a signal from the base station eNB or another user apparatus UE by radio. The control signal obtaining unit 402 obtains information of a control signal (example: assignment information, mapping information, and the like) from the signal received by the reception unit 401, and stores the information in the data storage unit 405. The discovery signal obtaining unit 403 obtains information of a discovery signal from a received signal.

The use resource determination unit 404 determines a resource to be used for discovery signal transmission based on assignment information stored in the data storage unit 405, service index and the like of the user apparatus UE itself. The resource state control unit 411 detects received power level of each DR as shown in step 201 in the backoff control shown in Fig. 23. The backoff control unit 410 performs the before-mentioned processes of backoff control shown in Fig. 23 based on detection results of the resource state detection unit 411, and the maximum backoff size.

The discovery signal generation unit 408 generates a discovery signal by using a resource determined by the use resource determination unit 404, and transmits it from the transmission unit 409.

The application 406 is a functional unit for performing processes on the before-mentioned various services. The UE information generation unit 407 generates a service index corresponding to the application 406 in use. The transmission unit 409 transmits a control signal including the service index to the base station eNB.

As mentioned above, the user apparatus UE in the present embodiment is configured as a user apparatus having a function for performing device-to-device communication by radio, including:

a resource state detection unit (example:

the resource state detection unit 411) configured to detect a state of each resource in a set of resources that can be used for device-to-device communication;
a backoff control unit (example: backoff control unit 410) configured, when the state detected by the resource state detection unit satisfies a predetermined condition, to set the user apparatus to be in a backoff state in which the user apparatus does not perform transmission of a discovery signal for a predetermined period; and
a discovery signal transmission unit (example: the use resource determination unit 404, the discovery signal generation unit 408, the transmission unit 409, the backoff control unit 410) configured, when the user apparatus is not in the backoff state, to select a resource from among the set of resources, and to transmit a discovery signal using the selected resource.

As mentioned above, by adopting a configuration performing backoff control, limited discovery resources can be effectively utilized by avoiding communication unavailability of many user apparatuses UE due to collision.

The predetermined condition is, for example, that received power level of each resource in the set of resources is equal to or greater than a predetermined threshold. By using such a condition, congestion state of DRs can be properly evaluated, so that useless backoff control can be avoided.

The backoff control unit is configured, for example, to determine the predetermined period based on a maximum backoff size received from a base station that communicates with the user apparatus. By determining the predetermined period (backoff period) based on a maximum backoff size received from a base station, the maximum backoff size can be dynamically changed, so that optimum backoff control appropriate for the situation can be realized.

The discovery signal transmission unit is configured, for example, when there is a free resource in the set of the resources, to select the free resource, and when there is no free resource, to select a resource where a congestion degree is low. Also, the discovery signal transmission unit is configured, for example, to select the resource where a congestion degree is low by selecting a resource, from among the set of resources, with a probability that is inversely proportional to received power level. By performing such selection control, it becomes possible to increase provability in that a discovery signal is received by a communication partner.

According to the present embodiment, there is provided a communication system including a user apparatus UE having a function for performing device-to-device communication by radio, and a base station eNB configured to communicate with the user apparatus UE.

The base station of the communication system includes:

an information transmission unit (example: the maximum backoff size determination unit 303, the control signal generation unit 304, the data storage unit 305, the transmission unit 306) configured to transmit, to the user apparatus, mapping information in which service identification information on device-to-device communication is associated with a maximum backoff window size, and

the user apparatus includes:

an information reception unit (example: the reception unit 401, the control signal obtaining unit 402) configured to receive the mapping information;

a resource state detection unit (example: the resource state detection unit 411) configured to detect a state of each resource in a set of resources that can be used for device-to-device communication; and

a backoff control unit (example: the backoff control unit 410) configured, when the state detected by the resource state detection unit satisfies a predetermined condition, to determine a backoff period based on the maximum backoff window size, and to set the user apparatus to be in a backoff state in which the user apparatus does not perform transmission of a discovery signal for the backoff period.

(Third embodiment)

Next, the third embodiment is described, in the third embodiment, an operation example when the user apparatus UE goes out of the NW coverage (that is, the user apparatus UE becomes out of the communication range), and an operation example when the user apparatus UE enters the NW coverage (that is, the user apparatus UE becomes in a communication range) are described. The third embodiment can be carried out by being combined with the first embodiment and/or the second embodiment, or the third embodiment can be generally applied irrespective of the first embodiment and the second embodiment. In the present embodiment, each of the base station eNB and the user apparatus UE includes functions described in the first embodiment, and further includes functions described in the third embodiment. Further, each of the base station eNB and the user apparatus UE may include functions described in the second embodiment.

<Operation example when the user apparatus exits from a NW coverage>

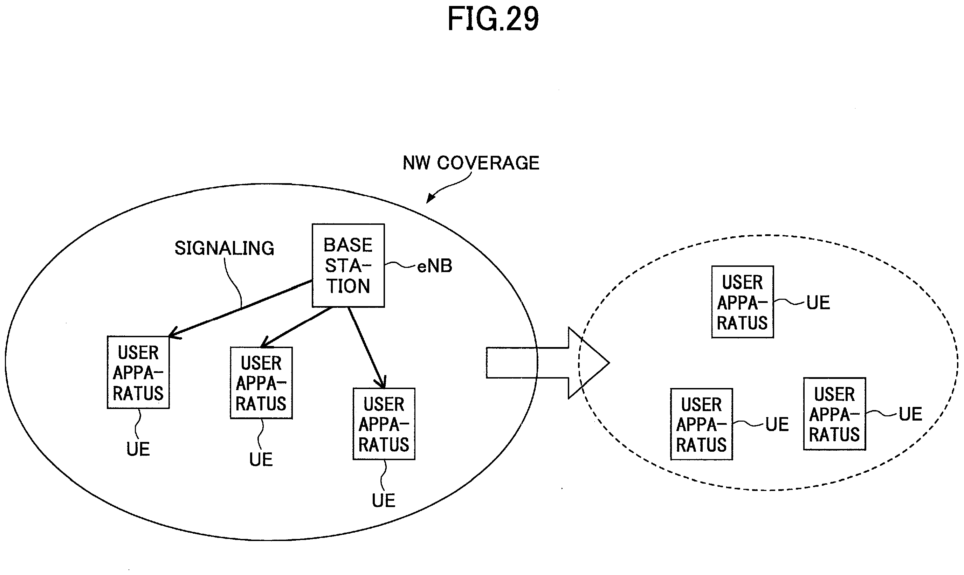

In the third embodiment, as shown in Fig. 29, when the user apparatus UE determines that it goes out of a NW coverage, the user apparatus UE changes a mode of itself to the mode of the distributed type. The process of mode change is performed by an after-mentioned coverage judgement unit 610, for example.

Although a judgement method for determining whether to exit from the NW coverage or not is not limited to a particular method, the exit from the NW coverage can be determined when received power becomes less than a predetermined threshold, for example. More particularly, in the present embodiment, the user apparatus UE measures RSRP (Reference Signal Received Power) based on a reference signal received from the base station eNB, and determines that it exits from the NW coverage when the state in which RSRP is less than the predetermined threshold continues for a predetermined period (T).

When the user apparatus UE goes out of the NW coverage, the user apparatus UE needs to select a band to be used for autonomously performing terminal-to-terminal communication without using a support from the NW (base station eNB). That is, the user apparatus UE that goes out of the NW coverage needs to select a band that is used by another user apparatus UE for terminal-to-terminal communication.

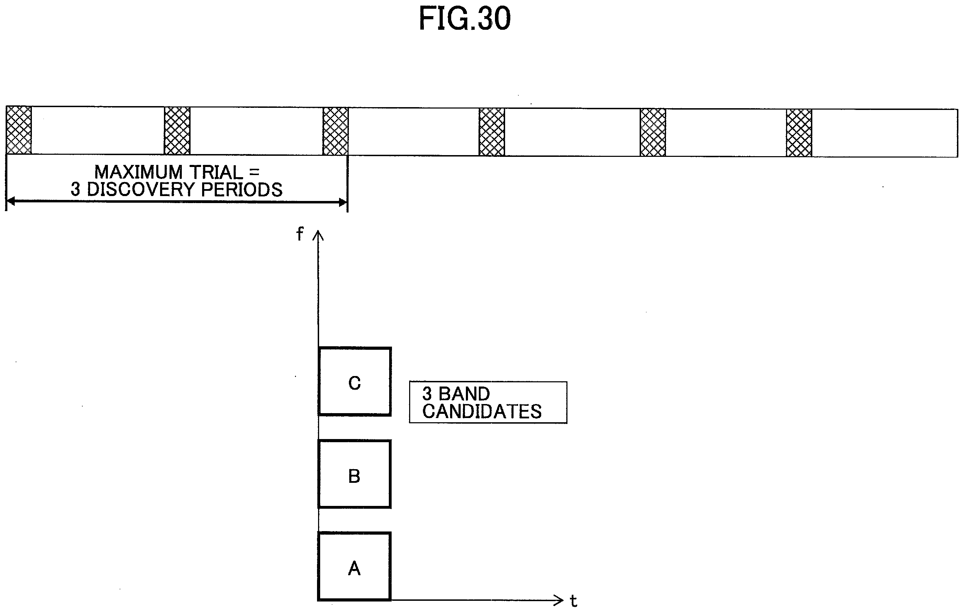

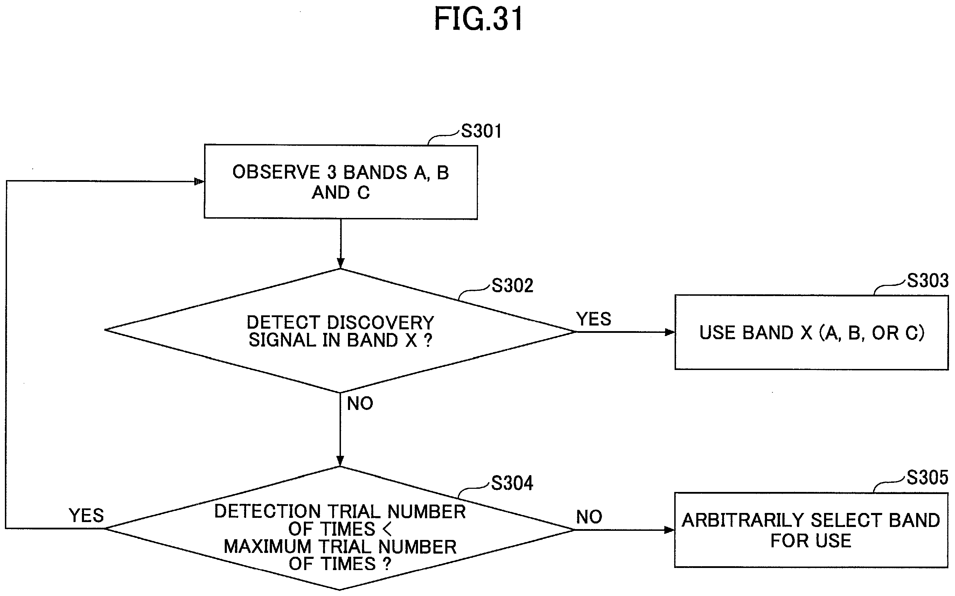

An operation example in a case where the user apparatus UE that goes out of the NW coverage selects a band that is used by another user apparatus UE for terminal-to-terminal communication is described with reference to Fig. 30 and Fig. 31.

In this example, as shown in Fig. 30, three bands (example: PS specific spectrum bands) are defined for terminal-to-terminal communication as shown in Fig. 30, and it is assumed that the user apparatus UE knows that there are the three bands A, B and C by an after-mentioned signaling (stored in a data storage unit 605).

As shown in Fig. 31, the user apparatus UE observes each of the three bands A, B and C to check whether a discovery signal is detected in a discovery period (step 301, step 302).

When a discovery signal is detected in a band X (A, B or C) (Yes in step 302), the user apparatus UE performs transmission and reception of a discovery signal in the band X (step 303). When a discovery signal is not detected in any of the bands A, B and C (No in step 302), the user apparatus UE continues detection trial of a discovery signal as long as the number of times of detection in the discovery period is less than a predetermined threshold (maximum trial threshold) (Yes in step 304). For example, in the example of Fig. 30, detection trial is performed for three discovery periods.

Returning to Fig. 31, when the number of times of detection trial becomes the predetermined threshold without detection of a discovery signal (No in step 304), the user apparatus UE arbitrarily selects a band from among the bands A, B and C, and performs transmission and reception of a discovery signal in the band (step 305). The situation of step 305 means that the user apparatus UE becomes the first UE that uses the band.

In the present embodiment, as indicated by a signaling in Fig. 29, the base station eNB broadcasts, to the user apparatus UE, before-mentioned RSRP measurement threshold, a period (T), and a maximum trial threshold. This broadcasting is performed by a cell-specific downlink RRC signaling, for example. The user apparatus UE in the NW coverage receives these pieces of information, and when the user apparatus UE goes out of the NW coverage, the user apparatus UE executes operation of detection of band and the like, by using these pieces of information as described above.

<Operation example when the user apparatus UE enters a NW coverage from an outside of the NW coverage>

When the user apparatus UE determines that it enters the NW coverage, the user apparatus UE transmits a service index to the base station eNB as described in the first embodiment.

Although a judgement method for determining whether to enter the NW coverage or not is not limited to a particular method, the entering in the NW coverage can be determined when received power becomes greater than a predetermined threshold, for example.

More particularly, the user apparatus UE measures RSRP (Reference Signal Received Power) based on a reference signal received from the base station eNB, and determines that it enters the NW coverage when the state in which RSRP is greater than the predetermined threshold continues for a predetermined period (T). These thresholds are values reported from the base station eNB as broadcast information when the user apparatus UE is in the NW coverage like the before-mentioned method. These thresholds may be the same or may not be the same as the thresholds used for determining out-of-NW coverage.

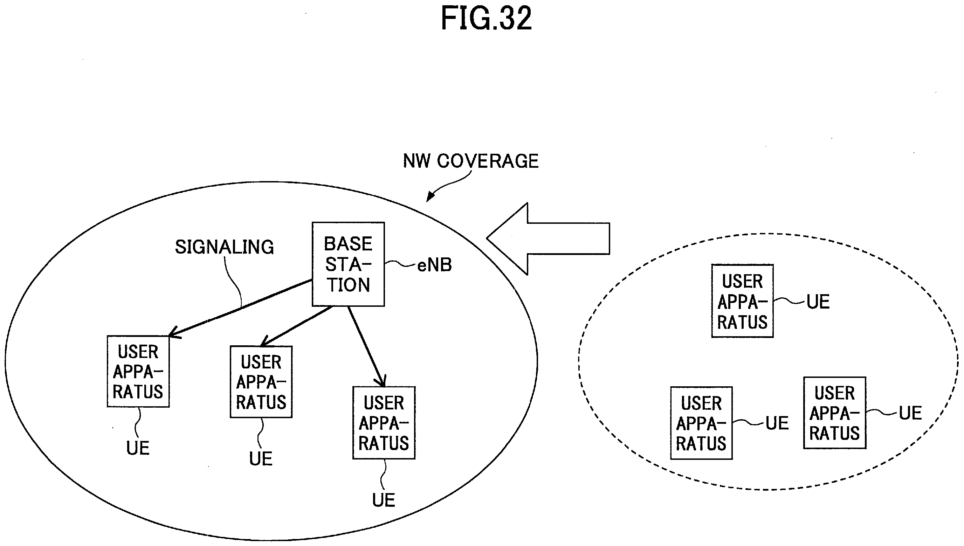

As indicated as a signaling in Fig. 32, the base station eNB determines a band to be used by each user apparatus UE for terminal-to-terminal communication from among a plurality of bands (example: before-mentioned bands A, B and C), and broadcasts the band to the user apparatus UE. The broadcasting is performed by a cell-specific downlink RRC signaling and the like. Each user apparatus UE in the NW coverage receives the information so as to be able to perform terminal-to-terminal communication using the same band.

<Apparatus configuration>

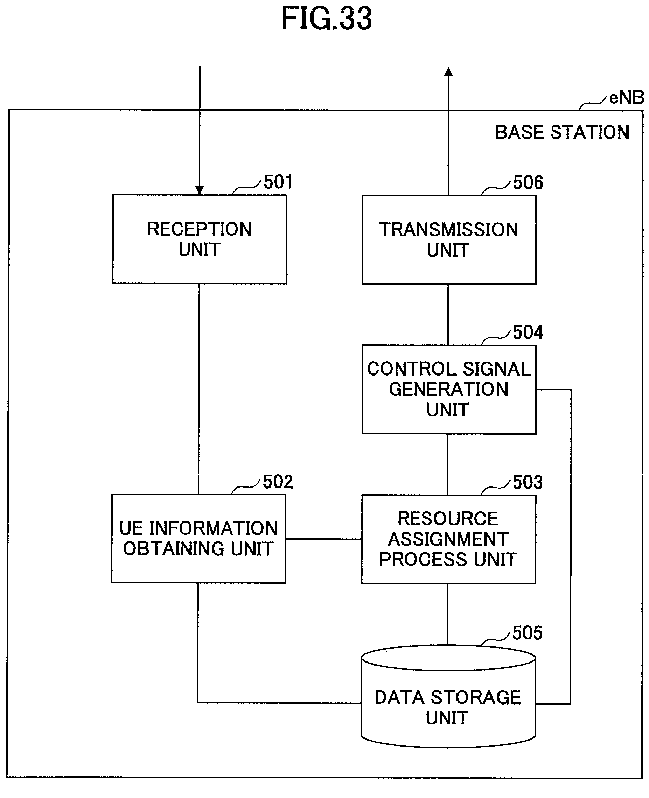

Fig. 33 shows a configuration example of the base station eNB in the third embodiment. As shown in Fig. 33, the base station eNB in the third embodiment includes a reception unit 501, a UE information obtaining unit 502, a resource assignment process unit 503, a control signal generation unit 504, a data storage unit 505 and a transmission unit 506.

The reception unit 501 receives a signal transmitted from a user apparatus UE by radio. The UE information obtaining unit 502 obtains information (service index, congestion information, discovery UE information, and the like) from a signal received from the user apparatus UE.

The resource assignment process unit 503 performs UE clustering, mode selection, and RP partitioning as described so far based on the table (example: Fig. 7) that is stored in the data storage unit 505, and a service index and the like received from the user apparatus UE, and generates information shown in Fig. 14(a), for example, and stores the information in the data storage unit 505. Also, the resource assignment process unit 503 also includes a function for determining a band to be used by user apparatuses UE under the base station eNB for transmission and reception of a discovery signal. The band may be determined beforehand in a fixed manner, and may be stored in the data storage unit 505.

The control signal generation unit 504 generates a control signal including information (example: information of Fig. 14(a), parameters in Fig. 19, the above-mentioned band, and the like) determined by the resource assignment process unit 503. Also, the control signal generation unit 504 includes a function for generating a control signal including a mapping table of a service index and a service type shown in Fig. 11. Also, the control signal generation unit 504 includes functions for obtaining parameters such as the threshold of RSRP, T, candidate bands, maximum trial number of times and the like from the data storage unit 505, and generates a control signal including these.

The transmission unit 506 transmits a control signal and the like generated by the control signal generation unit 504 to a user apparatus UE by radio.

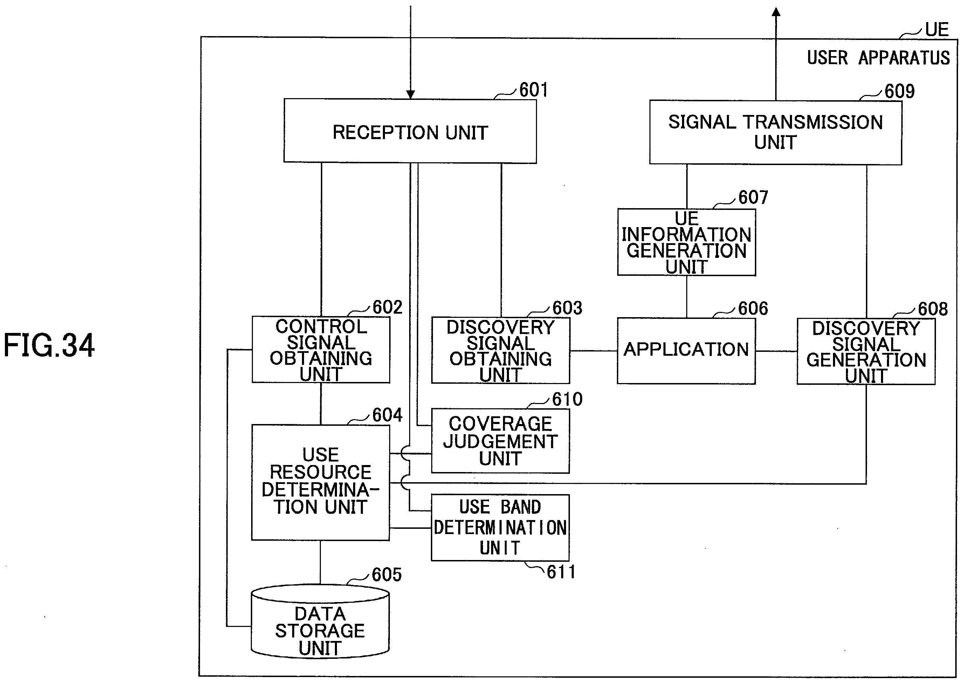

Fig. 34 shows a block diagram of a user apparatus UE in the third embodiment. As shown in Fig. 34, the user apparatus UE in the third embodiment includes a reception unit 601, a control signal obtaining unit 602, a discovery signal obtaining unit 603, a use resource determination unit 604, a data storage unit 605, an application 606, a UE information generation unit 607, a discovery signal generation unit 608, a transmission unit 609, a coverage judgement unit 610, and a use band determination unit 611.

The reception unit 601 receives a signal from the base station eNB or another user apparatus UE by radio. The control signal obtaining unit 602 obtains information of a control signal (example: parameters such as band for use, threshold of RSRP, T, candidate bands, maximum trial number of times and the like) from the signal received by the reception unit 601, and stores the information in the data storage unit 605. The discovery signal obtaining unit 603 obtains information of a discovery signal from a received signal.

The use resource determination unit 604 determines a resource to be used for discovery signal transmission based on the band determined by the use band determination unit 611, and assignment information and the like. The discovery signal generation unit 608 generates a discovery signal by using a resource determined by the use resource determination unit 604, and transmits it from the transmission unit 609.

The application 606 is a functional unit for performing processes on the before-mentioned various services. The UE information generation unit 607 generates a control signal including a service index corresponding to the application 606 in use. The transmission unit 609 transmits a control signal including a service index to the base station eNB.

As described before, the coverage judgement unit 610 measures RSRP, and compares it with a threshold so as to perform judgment for exit from the NW coverage and entering the NW coverage. The use band determination unit 611 performs use band determination process according to the procedure shown in Fig. 31 when the coverage judgement unit 610 determines exit from the NW coverage.

As described above, according to the embodiment of the present invention, it becomes possible to assign discovery resources efficiently by considering differences of requirements between various terminal-to-terminal communication services. Also, the probability of occurrence of collision can be decreased between a plurality of user apparatuses UE that perform terminal-to-terminal communication using limited resources, so that it becomes possible to improve performance of terminal-to-terminal communication.

In the above, the present invention has been explained while referring to the specific embodiments. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus and the base station have been explained by using functional block diagrams. However, each apparatus may be implemented in hardware, software, or a combination thereof. The software that operates operation corresponding to processes described in embodiments of the present invention, that is, software executed by a processor provided in the user apparatus UE, and software executed by a processor provided in the base station eNB may be stored respectively in any proper storage medium such as a RAM (Random Access Memory), a flash memory, a ROM (Read Only Memory), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the scope of the attached claims.

DESCRIPTION OF REFERENCE SIGNS

| UE | user apparatus |
| eNB | base station |
| 101 | reception unit |
| 102 | UE information obtaining unit |
| 103 | resource assignment process unit |
| 104 | control signal generation unit |
| 105 | data storage unit |
| 106 | transmission unit |
| 201 | reception unit |
| 202 | control signal obtaining unit |
| 203 | discovery signal obtaining unit |
| 204 | use resource determination unit |
| 205 | data storage unit |
| 206 | application |
| 207 | UE information generation unit |
| 208 | discovery signal generation unit |
| 209 | transmission unit |
| 301 | reception unit |
| 302 | UE information obtaining unit |
| 303 | maximum backoff size determination unit |
| 304 | control signal generation unit |
| 305 | data storage unit |
| 306 | transmission unit |
| 401 | reception unit |
| 402 | control signal obtaining unit |
| 403 | discovery signal obtaining unit |
| 404 | use resource determination unit |
| 405 | data storage unit |
| 406 | application |

| | |
|---|---|
| 407 | UE information generation unit |
| 408 | discovery signal generation unit |
| 409 | transmission unit |
| 410 | backoff control unit |
| 411 | resource state detection unit |
| 501 | reception unit |
| 502 | UE information obtaining unit |
| 503 | resource assignment process unit |
| 504 | control signal generation unit |
| 505 | data storage unit |
| 506 | transmission unit |
| 601 | reception unit |
| 602 | control signal obtaining unit |
| 603 | discovery signal obtaining unit |
| 604 | use resource determination unit |
| 605 | data storage unit |
| 606 | application |
| 607 | UE information generation unit |
| 608 | discovery signal generation unit |
| 609 | transmission unit |
| 610 | coverage judgement unit |
| 611 | use band determination unit |

## Claims

1. A user apparatus, comprising:

   a resource state detection unit (411) configured to detect a state of a resource in a set of resources that can be used for device-to-device communication;
   a control unit (410) configured, when the state detected by the resource state detection unit satisfies a predetermined condition, to set the user apparatus to be in a state in which the user apparatus does not perform transmission of a device-to-device communication signal for a predetermined period; and
   a transmission unit (409) configured, when the user apparatus performs transmission of a device-to-device communication signal, to randomly select a resource from among a set of resources, and to transmit a device-to-device communication signal using the selected resource.

2. The user apparatus as claimed in claim 1, wherein the transmission unit (409) is configured to, when there is a free resource in the set of the resources, select the free resource, and when there is no free resource, select a resource where a congestion degree is low.

3. The user apparatus as claimed in claim 2, wherein the transmission unit (409) is configured to select the resource where a congestion degree is low by selecting a resource, from among the set of resources, with a probability that is inversely proportional to received power level.

4. A method executed by a user apparatus, comprising:

   a resource state detection step (S201) of detecting a state of a resource in a set of resources that can be used for device-to-device communication;
   a control step (S202-S204) of, when the state detected by the resource state detection step satisfies a predetermined condition, setting the user apparatus to be in a state in which the user apparatus does not perform transmission of a device-to-device communication signal for a predetermined period; and
   a transmission step (S205-S207) of, when the user apparatus performs transmission of a device-to-device communication signal, randomly selecting a resource from among a set of resources, and transmitting a device-to-device communication signal using the selected resource.

## Patentansprüche

1. Benutzereinrichtung, umfassend:

   eine Ressourcenzustandsdetektionseinheit (411), die konfiguriert ist, einen Zustand einer Ressource in einem Satz von Ressourcen zu detektieren, die zur Vorrichtung-zu-Vorrichtung-Kommunikation verwendet werden kann;
   eine Steuereinheit (410), die konfiguriert ist, wenn der von der Ressourcenzustandsdetektionseinheit detektierte Zustand eine vorgegebene Bedingung erfüllt, die Benutzereinrichtung einzustellen, in einem Zustand zu sein, in dem die Benutzereinrichtung keine Übertragung eines Vorrichtung-zu-Vorrichtung-Kommunikationssignals für eine vorgegebene Dauer durchführt; und
   eine Übertragungseinheit (409), die konfiguriert ist, wenn die Benutzereinrichtung Übertragung eines Vorrichtung-zu-Vorrichtung-Kommunikationssignals durchführt, zufällig eine Ressource aus einem Satz von Ressourcen auszuwählen und ein Vorrichtung-zu-Vorrichtung-Kommunikationssignal unter Verwendung der ausgewählten Ressource zu übertragen.

2. Benutzereinrichtung nach Anspruch 1, wobei die Übertragungseinheit (409) konfiguriert ist, wenn es eine freie Ressource in dem Satz der Ressourcen gibt, die freie Ressource auszuwählen und wenn es keine freie Ressource gibt, eine Ressource auszuwählen, wo ein Überbelegungsgrad niedrig ist.

**3.** Benutzereinrichtung nach Anspruch 2, wobei die Übertragungseinheit (409) konfiguriert ist, die Ressource auszuwählen, wo ein Überbelegungsgrad niedrig ist, indem eine Ressource aus dem Satz von Ressourcen mit einer Wahrscheinlichkeit ausgewählt wird, die umgekehrt proportional zu empfangenem Leistungsgrad ist.

**4.** Verfahren, das von einer Benutzereinrichtung ausgeführt wird, umfassend:

einen Ressourcenzustandsdetektionsschritt (S201) zum Detektieren eines Zustands einer Ressource in einem Satz von Ressourcen, die für Vorrichtung-zu-Vorrichtung-Kommunikation verwendet werden kann;
einen Steuerungsschritt (S202-S204) zum, wenn der von dem Ressourcenzustandsdetektionsschritt detektierte Zustand eine vorgegebene Bedingung erfüllt, Einstellen der Benutzereinrichtung, um in einem Zustand zu sein, in dem die Benutzereinrichtung keine Übertragung eines Vorrichtung-zu-Vorrichtung-Kommunikationssignals für eine vorgegebene Dauer durchführt; und
einen Übertragungsschritt (S205-S207) zum, wenn die Benutzereinrichtung Übertragung eines Vorrichtung-zu-Vorrichtung-Kommunikationssignals durchführt, zufälligen Auswählen einer Ressource aus einem Satz von Ressourcen und Übertragen eines Vorrichtung-zu-Vorrichtung-Kommunikationssignals unter Verwendung der ausgewählten Ressource.

## Revendications

**1.** Appareil utilisateur comprenant :

une unité de détection d'état de ressource (411) configurée pour détecter un état d'une ressource dans un ensemble de ressources qui peuvent être utilisées pour une communication de dispositif à dispositif ;
une unité de commande (410) configurée, quand l'état détecté par l'unité de détection d'état de ressource satisfait à une condition prédéterminée, pour régler l'appareil utilisateur pour être dans un état dans lequel l'appareil utilisateur n'effectue pas de transmission d'un signal de communication de dispositif à dispositif pendant une période prédéterminée ; et
une unité de transmission (409) configurée, quand l'appareil utilisateur effectue une transmission d'un signal de communication de dispositif à dispositif, pour sélectionner de manière aléatoire une ressource parmi un ensemble de ressources, et pour transmettre un signal de communication de dispositif à dispositif en utilisant la ressource sélectionnée.

**2.** Appareil utilisateur selon la revendication 1, dans lequel l'unité de transmission (409) est configurée pour, quand il existe une ressource libre dans l'ensemble des ressources, sélectionner la ressource libre, et quand il n'existe aucune ressource libre, sélectionner une ressource où un degré de congestion est faible.

**3.** Appareil utilisateur selon la revendication 2, dans lequel l'unité de transmission (409) est configurée pour sélectionner la ressource où un degré de congestion est faible en sélectionnant une ressource, parmi l'ensemble de ressources, avec une probabilité qui est inversement proportionnelle à un niveau de puissance reçue.

**4.** Procédé exécuté par un appareil utilisateur, comprenant :

une étape de détection d'état de ressource (S201) pour détecter un état d'une ressource dans un ensemble de ressources qui peuvent être utilisées pour une communication de dispositif à dispositif ;
une étape de commande (S202-S204) pour, quand l'état détecté par l'étape de détection d'état de ressource satisfait à une condition prédéterminée, régler l'appareil utilisateur pour être dans un état dans lequel l'appareil utilisateur n'effectue pas de transmission d'un signal de communication de dispositif à dispositif pendant une période prédéterminée ; et
une étape de transmission (S205-S207) pour, quand l'appareil utilisateur effectue une transmission d'un signal de communication de dispositif à dispositif, sélectionner de manière aléatoire une ressource parmi un ensemble de ressources, et transmettre un signal de communication de dispositif à dispositif en utilisant la ressource sélectionnée.

# FIG.1

RESOURCE FOR D2D
DISCOVERY
(DISCOVERY PERIOD)

RESOURCE OF
CELLULAR NW

f

UE1

A

UE2

t

EP 3 445 132 B1

# FIG.2

# FIG.3

COLLISION

eNB

UE4

UE5

UE1

A

BASE STA- TION

USER APPA- RATUS

D

USER APPA- RATUS

C

USER APPA- RATUS

USER APPA- RATUS

UE3

UE7

E

UE2

USER APPA- RATUS

USER APPA- RATUS

D

USER APPA- RATUS

A

RESOURCE REUSE

UE6

B

NOT ABLE TO RECEIVE DISCOVERY SIGNAL (HALF DUPLEX)

RESOURCE FOR DISCOVERY SIGNAL

f

B

A

C

D

E

t

EP 3 445 132 B1

# FIG.4

EP 3 445 132 B1

FIG.5

# FIG.6

# FIG.7

| SERVICE INDEX | SERVICE TYPE | LATENCY | RELIABILITY | COVERAGE | ENERGY EFFICIENCY |
|---|---|---|---|---|---|
| 1 | PUBLIC SAFETY | LATENCY SENSITIVE | HIGH | GUARANTEED COVERAGE | MEDIUM CRITICAL |
| 2 | TRAFFIC SAFETY | LATENCY SENSITIVE | HIGH | GUARANTEED COVERAGE | LOW CRITICAL |
| 3 | NEIGHBOR SOCIAL NETWORK | LATENCY TOLERANT | MIDDLE | NON-GUARANTEED COVERAGE | CRITICAL |
| 4 | DIRECT DATA EXCHANGE | LATENCY TOLERANT | MIDDLE | NON-GUARANTEED COVERAGE | CRITICAL |

EP 3 445 132 B1

# FIG.8

USER APPARATUS UE OF LATENCY TOLERANT — LT

USER APPARATUS UE OF LATENCY SENSITIVE — LS

eNB

HIGH DENSITY UE ENVIRONMENT

# FIG.9

eNB

FIRST EMBODIMENT

| LT | USER APPARATUS UE OF LATENCY TOLERANT |
| LS | USER APPARATUS UE OF LATENCY SENSITIVE |

THIRD EMBODIMENT, OPERATION WHEN EXITING FROM NW COVERAGE/OPERATION WHEN ENTERING NW COVERAGE

FIRST EMBODIMENT

f

LT RP | LS RP

t

SECOND EMBODIMENT, RANDOM BACKOFF CONTROL IN DISTRIBUTED TYPE

EP 3 445 132 B1

# FIG.10

USER
APPARATUS
UE

BASE STATION
eNB

SERVICE INDEX, SERVICE TYPE
S101

SERVICE INDEX
S102

ASSIGNMENT INFORMATION
S103

CHANGED SERVICE INDEX
S104

CHANGED ASSIGNMENT INFORMATION
S105

# FIG.11

| SERVICE INDEX | SERVICE TYPE |
|---|---|
| 1 | PUBLIC SAFETY |
| 2 | TRAFFIC SAFETY |
| 3 | NEIGHBOR SOCIAL NETWORK |
| 4 | DIRECT DATA EXCHANGE |

⇐

| SERVICE INDEX | SERVICE TYPE | LATENCY | RELIABILITY | COVERAGE |
|---|---|---|---|---|
| 1 | PUBLIC SAFETY | LATENCY SENSITIVE | HIGH | GUARANTEED COVERAGE |
| 2 | TRAFFIC SAFETY | LATENCY SENSITIVE | HIGH | GUARANTEED COVERAGE |
| 3 | NEIGHBOR SOCIAL NETWORK | LATENCY TOLERANT | MIDDLE | NON-GUARANTEED COVERAGE |
| 4 | DIRECT DATA EXCHANGE | LATENCY TOLERANT | MIDDLE | NON-GUARANTEED COVERAGE |

BASE STATION —eNB

USER APPA-RATUS — UE1

USER APPA-RATUS — UE2

USER APPA-RATUS — UE3

USER APPA-RATUS — UE4

USER APPA-RATUS — UE5

USER APPA-RATUS — UE6

# FIG.12

APPLICATION LAYER

INTERFACE BETWEEN
APPLICATION LAYER
AND LAYER 2

LAYER 2

BASE
STATION —eNB

USER
APPA-
RATUS
UE1

USER
APPA-
RATUS
UE2

USER
APPA-
RATUS
UE3

USER
APPA-
RATUS
UE4

USER
APPA-
RATUS
UE5

USER
APPA-
RATUS
UE6

EP 3 445 132 B1

# FIG.13

| SERVICE INDEX | SERVICE TYPE |
|---|---|
| 1 | PUBLIC SAFETY |
| 2 | TRAFFIC SAFETY |
| 3 | NEIGHBOR SOCIAL NETWORK |
| 4 | DIRECT DATA EXCHANGE |

USER APPA-RATUS
UE

EXAMPLE: TRANSMIT SERVICE INDEX OF TWO BITS BY PUCCH

→

BASE STA-TION
eNB

| SERVICE INDEX | SERVICE TYPE | LATENCY |
|---|---|---|
| 1 | PUBLIC SAFETY | LATENCY SENSITIVE |
| 2 | TRAFFIC SAFETY | LATENCY SENSITIVE |
| 3 | NEIGHBOR SOCIAL NETWORK | LATENCY TOLERANT |
| 4 | DIRECT DATA EXCHANGE | LATENCY TOLERANT |

EP 3 445 132 B1

# FIG.14

EP 3 445 132 B1

| SERVICE INDEX | SERVICE TYPE | LATENCY | DR ASSIGNMENT MODE | RP DIVISION IDENTIFICATION INFORMATION |
|---|---|---|---|---|
| 1 | PUBLIC SAFETY | LATENCY SENSITIVE | CENTRALIZED TYPE | DR 1, 2, 3 |
| 2 | TRAFFIC SAFETY | LATENCY SENSITIVE | CENTRALIZED TYPE | DR 1, 2, 3 |
| 3 | NEIGHBOR SOCIAL NETWORK | LATENCY TOLERANT | DISTRIBUTED TYPE | DR 4, 5, 6, 7, 8, 9 |
| 4 | DIRECT DATA EXCHANGE | LATENCY TOLERANT | DISTRIBUTED TYPE | DR 4, 5, 6, 7, 8, 9 |

(a)

(b)

# FIG.15

EP 3 445 132 B1

# FIG.16

DISTRIBUTED TYPE                          CENTRALIZED TYPE

# FIG.17

EP 3 445 132 B1

# FIG.18

BASE STA-TION ~eNB

DISTRIBUTED TYPE

CENTRALIZED TYPE

| 1 | 4 | 7 |
| 2 | 5 | 8 |
| 3 | 6 | 9 |

EP 3 445 132 B1

FIG.19

EP 3 445 132 B1

RP OF USER APPARATUS OF LS (LATENCY SENSITIVE)

TIME

DISCOVERY PERIOD INDEX

DR INDEX

PATTERN REPETITION CYCLE

UE4

UE5

UE4

# FIG.20

OBSERVATION WINDOW =
3 DISCOVERY PERIODS

RESOURCE FOR D2D
DISCOVERY
(DISCOVERY PERIOD)

EP 3 445 132 B1

# FIG.21

# FIG.22

EP 3 445 132 B1

UE

USER APPARATUS

RECEPTION UNIT 201

SIGNAL TRANSMISSION UNIT 209

UE INFORMATION GENERATION UNIT 207

CONTROL SIGNAL OBTAINING UNIT 202

DISCOVERY SIGNAL OBTAINING UNIT 203

APPLICATION 206

DISCOVERY SIGNAL GENERATION UNIT 208

USE RESOURCE DETERMINATION UNIT 204

DATA STORAGE UNIT 205

# FIG.23

MONITOR
ALL DRS — S201

RECEIVED POWER
LEVEL OF ALL DRS
$\geqq$ THRESHOLD
? — S202

BACKOFF — S203

TIMER EXPIRED ? — S204

FREE DR ? — S205

SELECT
FREE DR — S206

SELECT DR OF
LOW CONGESTION — S207

EP 3 445 132 B1

# FIG.24

RESOURCE FOR D2D DISCOVERY
(DISCOVERY PERIOD)

RESOURCE FOR D2D DISCOVERY
(DISCOVERY PERIOD)

ALL DR BUSY

DR RECEIVED POWER $\geqq$ THRESHOLD

DR RECEIVED POWER $<$ THRESHOLD

BACKOFF TIMER

EP 3 445 132 B1

# FIG.25

EP 3 445 132 B1

# FIG.26

| SERVICE INDEX | SERVICE TYPE | MAXIMUM BACKOFF WINDOW SIZE |
|---|---|---|
| 1 | PUBLIC SAFETY | NONE |
| 2 | TRAFFIC SAFETY | NONE |
| 3 | NEIGHBOR SOCIAL NETWORK | 32 × DISCOVERY PERIOD |
| 4 | DIRECT DATA EXCHANGE | 64 × DISCOVERY PERIOD |
| 5 | MULTI-USER GAME | 16 × DISCOVERY PERIOD |

LT — USER APPARATUS UE OF LATENCY TOLERANT

LS — USER APPARATUS UE OF LATENCY SENSITIVE

BASE STA-TION — eNB

LT  LT  LT

LS  LS  LS

EP 3 445 132 B1

# FIG.27

FIG.28

EP 3 445 132 B1

# FIG.29

EP 3 445 132 B1

# FIG.30

MAXIMUM TRIAL =
3 DISCOVERY PERIODS

3 BAND
CANDIDATES

C

B

A

EP 3 445 132 B1

# FIG.31

```
                    ┌─────────────────────┐  S301
                    │  OBSERVE 3 BANDS A, B │
                    │        AND C          │
                    └─────────────────────┘
                              │
                              ▼
                         S302
              ╱────────────────────╲          YES     ┌──────────────────────────┐ S303
             ╱   DETECT DISCOVERY    ╲───────────────▶│  USE BAND X (A, B, OR C)  │
             ╲   SIGNAL IN BAND X ?  ╱                 └──────────────────────────┘
              ╲────────────────────╱
                       │ NO
                       ▼
                    S304
        ╱─────────────────────────╲       NO      ┌──────────────────────────┐ S305
       ╱   DETECTION TRIAL NUMBER   ╲─────────────▶│  ARBITRARILY SELECT BAND  │
  YES  ╲        OF TIMES <          ╱              │        FOR USE            │
       ╱   MAXIMUM TRIAL NUMBER     ╲              └──────────────────────────┘
        ╲       OF TIMES ?          ╱
         ╲─────────────────────────╱
```

# FIG.32

NW COVERAGE

SIGNALING

BASE
STA-
TION — eNB

USER
APPA-
RATUS
UE

USER
APPA-
RATUS
UE

USER
APPA-
RATUS
UE

USER
APPA-
RATUS — UE

USER
APPA-
RATUS — UE

USER
APPA-
RATUS — UE

EP 3 445 132 B1

# FIG.33

FIG.34

EP 3 445 132 B1

UE
USER APPARATUS

RECEPTION UNIT ~601

SIGNAL TRANSMISSION UNIT ~609

UE INFORMATION GENERATION UNIT ~607

CONTROL SIGNAL OBTAINING UNIT ~602

DISCOVERY SIGNAL OBTAINING UNIT ~603

APPLICATION ~606

DISCOVERY SIGNAL GENERATION UNIT ~608

COVERAGE JUDGEMENT UNIT ~610

USE RESOURCE DETERMINA-TION UNIT ~604

USE BAND DETERMINATION UNIT ~611

DATA STORAGE UNIT ~605

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130010618 A1

- WO 2013049959 A1